# EUROPEAN PATENT SPECIFICATION

(11) **EP 4 146 505 B1**
(45) Date of publication and mention of the grant of the patent: **23.07.2025**
(21) Application number: 21724669.3
(22) Date of filing: 07.05.2021
(51) Int. Cl.: B60R 1/072, B60R 1/074

(54) **REAR VIEW DEVICE WITH ACTUATOR AND VEHICLE THEREWITH**
RÜCKBLICKVORRICHTUNG MIT AKTUATOR UND FAHRZEUG DAMIT
DISPOSITIF DE VISUALISATION ARRIÈRE AVEC ACTIONNEUR ET VÉHICULE DOTÉ DE CE DERNIER

(30) Priority: 07.05.2020 US 202063021168 P; 14.12.2020 US 202063124987 P
(43) Date of publication of application: 15.03.2023
(73) Proprietor: Motherson Innovations Company Limited, London EC2N 2AX (GB)
(72) Inventor: HARRIS, Tom, Portchester Hampshire PO 16 9SD (GB); BEECHER, Stephen, Portchester Hampshire PO 16 9SD (GB); KERSHAW, David, Portchester Hampshire PO 16 9SD (GB); ASPDEN, Gareth, Portchester Hampshire PO 16 9SD (GB); KURTI, Levente, Portchester Hampshire PO 16 9SD (GB); JONES, Warwick, Portchester Hampshire PO 16 9SD (GB); PARK, Dong Myeong, Portchester Hampshire PO 16 9SD (GB); ACS, Levente, 70327 Stuttgart (DE); STAIGER, Thorsten, 70327 Stuttgart (DE)
(74) Representative: Weber-Bruls, Dorothée
(86) International application number: PCT/EP2021/062219
(87) International publication number: WO 2021/224492

(56) References cited:
- US-A1- 2011 194 203
- US-A1- 2018 257 571
- US-A1- 2019 039 522

## Description

### FIELD

The present disclosure relates to a rear view device for a vehicle in line with the pre-amble of claim 1, said rear view device comprising an actuator. It also relates to a vehicle with at least one such rea view device.

### BACKGROUND

The statements in this section merely provide background information related to the present disclosure and may not constitute prior art.

Vehicles are required to have a rear view system that is operable to provide a driver of the vehicle a rearward field of view. The rear view system typically includes one or more components that are required to be actuated relative to the vehicle body along a first axis, such components may include mirrors or cameras. As an example, the actuation of components along a first axis may provide the driver of the vehicle the ability to fine tune the rearward field of view provided by the rear view system.

Further, some rear view systems provide actuation of one or more components along a second axis, such components may include mirrors or cameras. As an example, the actuation of components along a secondary axis allows the components to be stored closer to the vehicle body in certain conditions. Generally, actuation of components in a rear view system along a secondary axis is achieved using a secondary actuator.

Electromechanical actuators are typically used to rotate the components relative to the vehicle body. However, existing electromechanical actuators may be noisy, heavy, and large in size and often require high strength metallic parts (e.g., gearing) due to high shock loads acting on a gear train during impacts, thereby making the actuators heavier and costlier.

The use of a single actuator to provide adjustment of components along multiple axes allows for adjustment along a second axis which can reduce rear view system design cost and complexity.

US 2011/194203 A1 describes an exterior rearview mirror assembly for a vehicle according to the preamble of claim 1, said exterior rearview mirror assembly comprising: a mounting portion mounted to a side of a vehicle; a mirror head portion adjustably mounted at said mounting portion; a reflective element fixedly included at said mirror head portion and moving in tandem with said mirror head portion; and an actuator operable to impart pivotal movement of said mirror head portion relative to said mounting portion and about a generally horizontal pivot axis and a generally vertical pivot axis to pivotally adjust said mirror head portion and said reflective element relative to the side of the vehicle to which said mounting portion is mounted.

US 2018/257571 A1 refers to an exterior rearview mirror assembly configured for mounting at an exterior portion of a vehicle, said exterior rearview mirror assembly comprising: a mounting arm having a first end and a second end, wherein said first end of said mounting arm is configured for attachment at an exterior portion of a vehicle equipped with said exterior rearview mirror assembly; a mirror head disposed at said second end of said mounting arm and movable relative to said mounting arm; wherein said mirror head comprises a mirror casing and a mirror reflective element; an electrically-operable actuator, wherein, with said first end of said mounting arm attached at the exterior portion of the equipped vehicle, said actuator, when electrically operated, moves said mirror head relative to said mounting arm; wherein, when said actuator is electrically operated to move said mirror head relative to said mounting arm, said mirror reflective element and said mirror casing both move in tandem with movement of said mirror head relative to said mounting arm; and wherein, with said first end of said mounting arm attached at the exterior portion of the equipped vehicle, said actuator, when electrically operated, moves said mirror head relative to said mounting arm to vertically and horizontally adjust a rearward field of view of a driver of the equipped vehicle who is viewing said mirror reflective element.

US 2019/039522 A1 teaches an exterior rearview mirror assembly configured for mounting at an exterior side portion of a vehicle, said exterior rearview mirror assembly comprising: a mirror head comprising a mirror casing and a mirror reflective element;
an electrically-operated actuator; wherein said mirror head is attached at said electrically-operated actuator at one end of a mounting arm of said exterior rearview mirror assembly; wherein a mounting portion configured for attachment of said exterior rearview mirror assembly at an exterior side portion of a vehicle equipped with said exterior rearview mirror assembly is disposed at another end of said mounting arm that is, with said mounting portion attached at the exterior side portion of the equipped vehicle, at or near the exterior side portion of the equipped vehicle; and wherein, with said mounting portion attached at the exterior side portion of the equipped vehicle, said electrically-operated actuator is electrically operable to move said mirror reflective element and said mirror casing together in tandem to vertically and horizontally adjust a field of view of a driver of the equipped vehicle who is viewing said mirror reflective element.

### SUMMARY

It is the object of the present disclosure to further develop the known rear view device for a vehicle in order to overcome the drawbacks of the prior art.

This object is achieved by the features of the characterizing part of claim 1.

Embodiments of the rear view device of the present disclosure are described in the sub-claims 2 to 26.

The object is also achieved by a vehicle with at least one rear view device according to this disclosure.

Generally, the present disclosure provides a rear view device for a vehicle comprising a mirror base that provides a first attachment end for attachment to the side of a vehicle and a second attachment end for an actuator. The rear view device additionally comprises a mirror head comprising an actuator moving the entire mirror head. For that purpose, a hinge of the actuator is adapted to be engaged by a complementary hinge of the case frame. In addition or as alternative, a tilt axle of the actuator is adapted to be fixedly attached to the case lower and/or the case frame. Still further, the actuator is associated with a shroud for attachment of the actuator such that the mirror head creates a seal. An additional seal is created by the attachment of the mirror head to the mirror base.

It should be noted that the features set out individually in the following description can be combined with each other in any technically advantageous manner and set out other forms of the present disclosure. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number. The description further characterizes and specifies the present disclosure in particular in connection with the Figures.

### DRAWINGS

In order that the disclosure may be well understood, there will now be described various forms thereof, given by way of example, reference being made to the accompanying drawings, in which:
- FIG. 1: illustrates a vehicle in accordance with aspects of the present disclosure;
- FIG. 2A: illustrates a top down view of a rear view device with a mirror head in a drive position in accordance with aspects of the present disclosure;
- FIG. 2B: illustrates a top down view of the rear view device with the mirror head in a folded position in accordance with aspects of the present disclosure;
- FIG. 3A: illustrates a side view of the rear view device with the mirror head in a nominal position in accordance with aspects of the present disclosure;
- FIG. 3B: illustrates a side view of the rear view device with the mirror head tilted upwards in accordance with aspects of the present disclosure;
- FIG. 3C: illustrates a side view of the rear view device with the mirror head tilted downwards in accordance with aspects of the present disclosure;
- FIG. 4A: illustrates a top, isometric, assembled view of an actuator to be used with a rear view device in accordance with aspects of the present disclosure;
- FIG. 4B: illustrates a side view of the actuator of FIG. 4A;
- FIG. 5A: illustrates an isometric exploded view of the actuator of FIG. 4A;
- FIG. 5B: illustrates an additional isometric exploded view of the actuator of FIG. 4A;
- FIG. 6: illustrates a case lower to be used with a rear view device in accordance with aspects of the present disclosure;
- FIG. 7: illustrates the actuator of FIG. 4A being attached to the case lower of FIG. 6;
- FIG. 8: illustrates a case frame to be used with a rear view device in accordance with aspects of the present disclosure;
- FIG. 9A: illustrates the case frame of FIG. 8 being attached;
- FIG. 9B: illustrates an isometric view of the case frame of FIG. 8 being attached;
- FIG. 10A: illustrates a cross-section cut through the rear view device of FIG. 9B;
- FIG. 10B: illustrates the mirror head on view of the cross-section cut in line with FIG: 10A, with the mirror head in a nominal position;
- FIG. 10C: illustrates the mirror head on view of the cross-section cut in line with FIG. 10A, with the mirror head tilted upwards;
- FIG. 10D: illustrates the mirror head on view of the cross-section cut in line with FIG. 10A, with the mirror head tilted downwards;
- FIG. 11: illustrates an isometric view of a spider frame to be used with a rear view device in accordance with aspects of the present disclosure;
- FIG. 12A: illustrates an exploded isometric side view of the spider frame of FIG. 11 being attached to a partial rear view device;
- FIG. 12B: illustrates an assembled isometric view of the spider frame attached to the partial rear view device of FIG. 12B;
- FIG. 13: illustrates a top isometric view of a bezel mounted case frame in accordance with aspects of the present disclosure;
- FIG. 14A: illustrates an exploded isometric view of the bezel mounted case frame being attached to a partial device in accordance with aspects of the present disclosure;
- FIG. 14B: illustrates an assembled isometric side view of the bezel mounted case frame attached to a partial device in accordance with aspects of the present disclosure;
- FIG. 15: illustrates a case lower and gasket of a rear view device in accordance with aspects of the present disclosure;
- FIG. 16: illustrates a bottom view of an actuator and a shroud of a rear view device in accordance with aspects of the present disclosure;
- FIG. 17A: illustrates a top-down view of the actuator of FIG. 16 fixed to a case lower in accordance with aspects of the present disclosure;
- FIG. 17B: illustrates a bottom-up view of the actuator fixed to the case lower of FIG. 17A;
- FIG. 18: illustrates a base frame of a rear view device in accordance with aspects of the present disclosure;
- FIG. 19: illustrates a front view of the actuator of FIG. 17A attached to the base frame of FIG. 18 in a nominal position;
- FIG. 20: illustrates an assembly similar to FIG. 19, but with a breakface gasket removed;
- FIG. 21A: illustrates a front view of the shroud of FIG. 16 hitting a hard stop in the rearward direction;
- FIG. 21B: illustrates a side view of the shroud of FIG. 16 hitting a hard stop in the rearward direction;
- FIG. 22A: illustrates a front view of the shroud of FIG. 16 hitting a hard stop in the forward direction;
- FIG. 22B: illustrates a side view of the shroud of FIG. 16 hitting a hard stop in the forward direction;
- FIG. 23: illustrates a base cover of a rear view device in accordance with aspects of the present disclosure;
- FIG. 24A: illustrates a static shroud of a rear view device in accordance with aspects of the present disclosure;
- FIG. 24B: illustrates the rotation of a mirror head around the static shroud of FIG. 24A;
- FIG. 25A: is a schematic cross-section through a part of an actuator of a rear view device in accordance with aspects of the present disclosure;
- FIG. 25B: is a schematic representation of tail pin to be inserted into the actuator of FIG. 25A;
- FIG. 26A: is a side view of an upper housing of an actuator to be used with a rearview device in accordance with aspects of the present invention;
- FIG. 26B: is a side view of a tail pin to be used with the upper housing of FIG. 26A; and
- FIG. 27: is a perspective view of a tilt axle.

### DETAILED DESCRIPTION

The following description is merely exemplary in nature and is not intended to limit the present disclosure, application, or uses. It should be understood that throughout the drawings, corresponding reference numerals indicate like or corresponding parts and features.

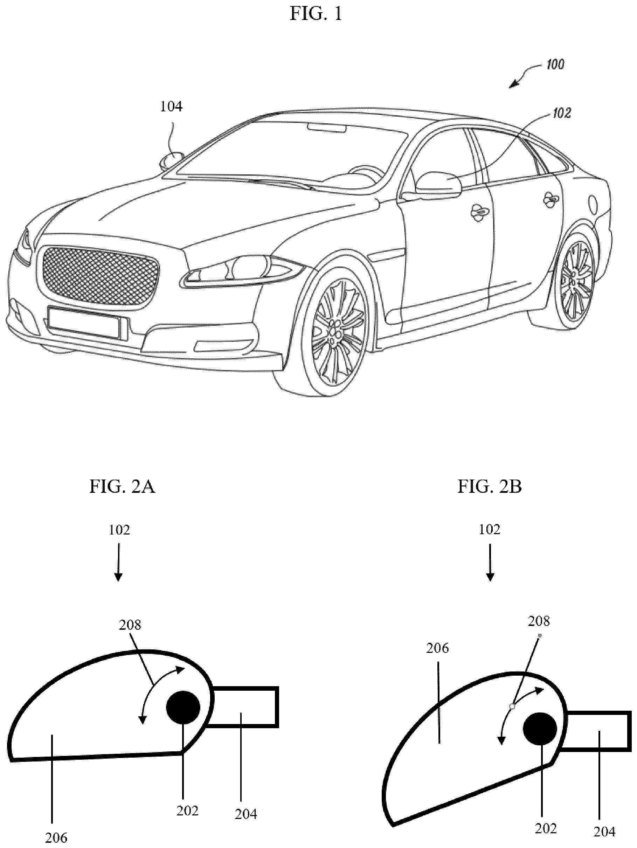

FIG. 1 illustrates a vehicle 100 in accordance with aspects of the present disclosure.

As shown in FIG. 1, the vehicle 100 includes a rear view device 102, 104 on each of its sides. Although the vehicle 100 is illustrated as a passenger car, the vehicle 100 may be any other type of vehicle, non-limiting examples of the vehicle 100 include a truck, off-road vehicle, bus, motorcycle, aircraft, tram, locomotive, or heavy-duty vehicle.

In FIG. 1, the rear view mirror devices s 102, 104 are illustrated as side view mirrors. In alternative variations, the rear view devices 102, 104 may be implemented as camera systems. The rear view devices 102, 104 are arranged on the vehicle 100 such that they may be adjusted to provide a view rearward of the vehicle to a driver.

The operation of the rear view devices 102, 104 will now be further described with additional reference to FIGs. 2A-3C. While the following description will refer to the rear view device 104, it will be appreciated that the rear view device 104 has an analogue structure.

FIGs 2A-B show a top down view of the rear view device 102 in accordance with aspects of the present disclosure.

As shown in FIGs 2A-B the rear view device 102 includes an axis 202, a mirror base 204, and a mirror head 206. In FIG. 2A, the rear view device 102 can be seen in a top down view with the mirror head 206 in the drive position. When actuated in a first direction relative to the axis 202 as shown by line 208, movement is imparted to the mirror head 206 to rotate it around the axis 202 to a stored position as shown in FIG. 2B. Additionally, when actuated in a second direction relative to the axis 202 as shown by line 208, movement can be imparted to the mirror head 206 when in the stored position shown in FIG. 2B to rotate it back to the drive position shown in FIG. 2A.

The actuation of the mirror head 206 about the axis 202 can be done from any position to move the mirror head 206 to any other position about the axis 202. For example, the mirror head 206 may start in the stored position as shown in FIG. 2B and then be actuated in the second direction about the axis 202 to move the mirror head 206 to the drive position. The mirror head 206 may be adjusted to any position between the drive position shown in FIG. 2A and the stored position shown in FIG. 2B.

Additionally, when the mirror head 206 is in the drive position as shown in FIG. 2A, actuation can be performed such that it moves the mirror head 206 to adjust the rearward field of view of the driver of the vehicle 100. The movement required to adjust the mirror head 206 such that it adjusts the rearward field of view of the driver of the vehicle 100 is less than that required to move the mirror head 206 from the drive position to the stored position or from the stored position to the drive position.

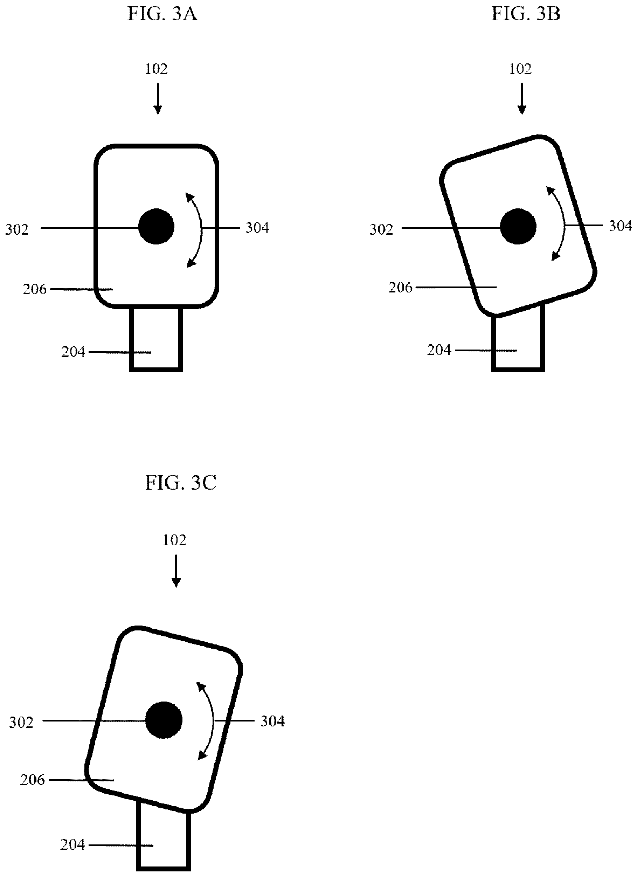

FIGs 3A-C show a side view of the rear view device 102 in accordance with aspects of the present disclosure.

As shown in the FIGs 3A-C, the rear view device 102 includes the mirror base 204, the mirror head 206, and an axis 302. In FIG. 3A, the rear view device 102 can be seen in a side view with the mirror head 206 in a nominal position. When actuated in a first direction as shown by line 304, movement is imparted to the mirror head 206 such that it is tilted upwards to the position shown in FIG. 3B. When actuated in a second direction as shown by line 304, movement is imparted to the mirror head 206 such that it is tiled downward to the position shown in FIG. 3C.

The actuation of the mirror head about the axis 302 can be done from any position to move the mirror head 206 to any other position about the axis 302. For example, the mirror head may start tilted upwards as shown in FIG. 3B and then actuated in the second direction to tilt the mirror head 206 downwards. While being tilted downwards, actuation can be stopped to adjust the mirror head 206 to the nominal position shown in FIG. 3A or continued to adjust the mirror head 206 downwards until it reaches the position shown in FIG. 3C. Further, the mirror head 206 can be tilted to any position between that shown in FIG. 3B and FIG. 3C.

The description and the discussion of the figures that follows is in regards to the rear view device 102, however it should be noted that device 104 functions in a similar fashion.

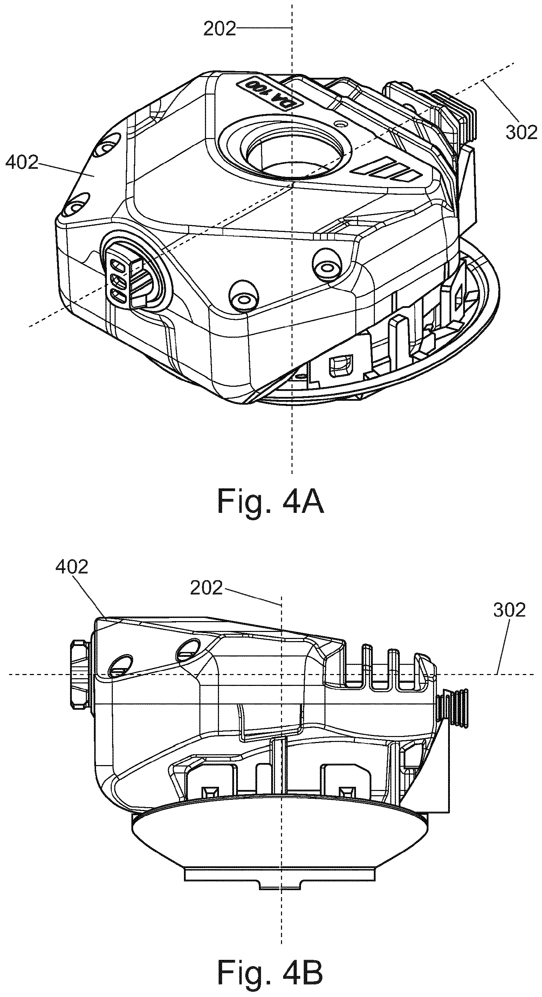

FIG. 4 shows an actuator 402 in accordance with aspects of the present disclosure. As shown in the figure, the actuator 402 includes the axis 202 and the axis 302. The axis 202 is substantially perpendicular to the axis 302. Further, the axis 202 is substantially vertical relative to actuator 402 and the axis 302 is substantially horizontal relative to actuator 402.

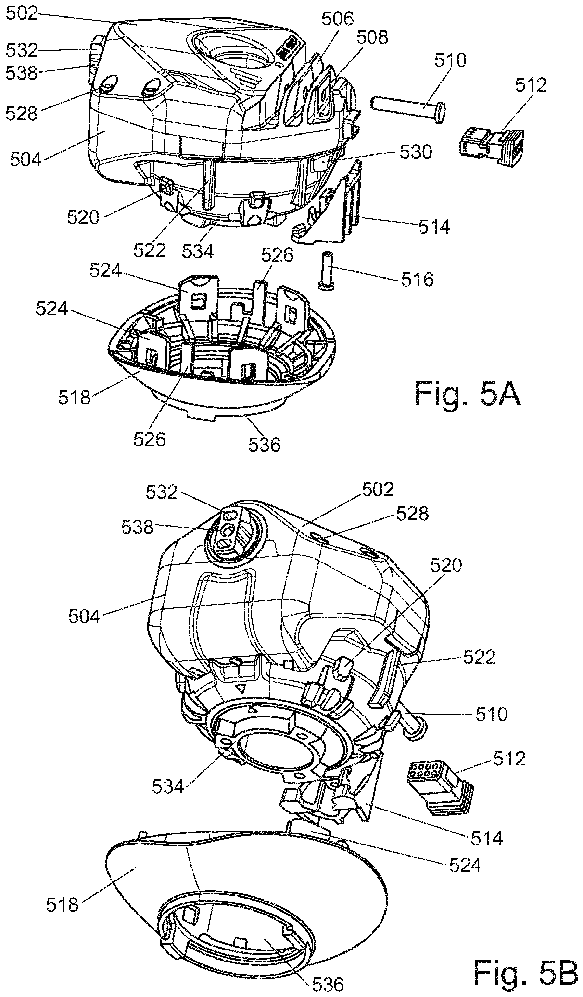

FIG. 5A shows an exploded view of the actuator 402 of FIG. 4 in accordance with aspects of the present disclosure. FIG. 5B shows an additional exploded view of the actuator 402 in accordance with aspects of the present disclosure.

As shown in the FIGs 5A-B, the actuator 402 further includes an upper housing 502, a lower housing 504, an interleaved hinge 506 providing one or more connection spaces between two layers, projections or the like, an aperture 508, a tail-pin 510, a connector 512, a camera mount 514, a fastener 516, a shroud 518, protrusions 520, guides 522, a further fastener 528, a further aperture 530, a tilt axle 532, and a foot 534. The shroud 518 provides a spherical seat and further includes one or more clips 524, one or more guides 526, and a still further aperture 536. The tilt axle 532 further comprises an aperture 538.

The upper housing 502 and the lower housing 504 are operable to house the internal components of the actuator 402. The upper housing 502 and the lower housing 504 are additionally operable to be joined or fastened together by the fastener 528. In this example variation, the fastener 528 is illustrated as a bolt. However, in other variations, the fastener 528 may be a pin, weld, clip or any other fastener or fastening method that allows the upper housing 502 and the lower housing 504 to be joined together.

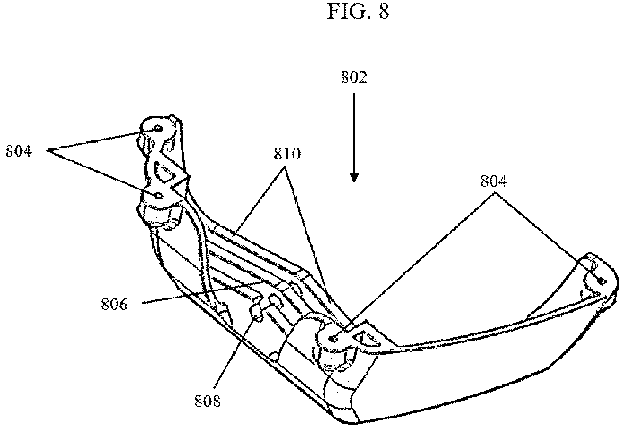

The interleaved hinge 506 is operable to allow movement of a case frame (see case frame 802 in FIGs. 8-14B) of the rear view device 102. The interleaved hinge 506 is additionally operable to contain the aperture 508 and to be comprised of multiple protrusions with gaps in-between each successive protrusion. The gaps between the protrusions allow the case frame 802 with corresponding protrusions to be interleaved with the interleaved hinge 506.

The aperture 508 is operable to allow insertion of the tail-pin 510 and to be axially aligned with an aperture of an interleaved hinge of the case frame 802 as will be explained below (shown in FIGs. 8-14B). The aperture 508 is further operable to be axially aligned with the axis 302 of FIG. 3.

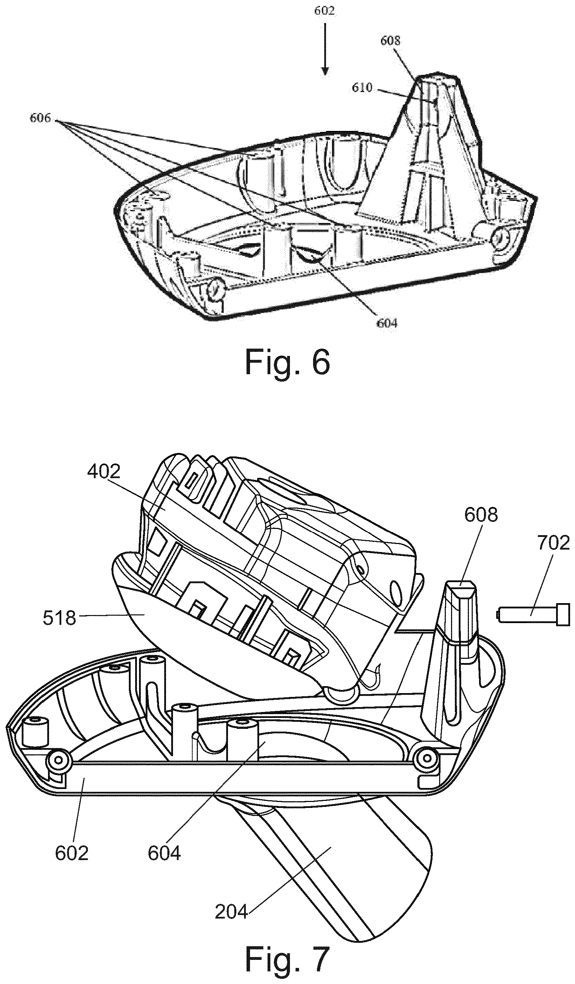

The tail-pin 510 is operable to be placed through the aperture 508 of the interleaved hinge 506. The tail-pin 510 is additionally operable to be placed through the aperture 508 and an aperture of a case lower 602 or the case frame 802 (shown in FIGs. 6-14B) interleaved with interleaved hinge 506. The operation and interleaving of the case lower 602 or the case frame 802 with the interleaved hinge 506, the aperture 508, and the tail-pin 510 will be further discussed later with additional reference to FIGs. 6-14B.

The connector 512 is operable to be inserted into the actuator 402. When the connector 512 is inserted into the actuator 402, it may deliver power from the vehicle to the actuator 402.

The camera mount 514 is operable to connect to the lower housing 504 of the actuator 402 and to be fixed to the actuator 402 by placing the fastener 516 through the camera mount 514 and into the aperture 530.

In this example variation, the fastener 516 is illustrated as a bolt, however in other example variations, the fastener 516 may be a pin, weld, clip or any other fastener or fastening method that enables the fixing of the camera mount 514 to the actuator 402. Additionally, in this example variation, the camera mount 514 is designed to secure a camera (not shown) for use with the rear view device 102; however in other variations, the camera mount 514 could be used to secure any one of a number of components used in the rear view device 102. Non-limiting examples of components which could be mounted on the camera mount 514 include a multi-functional lamp unit, a turn signal module, an approach lamp, or an electronic module such as a GPS module or Wi-Fi module.

The shroud 518 is operable to attach to the actuator 402 in order to provide a seal for any gaps created between the mirror base 204 and the mirror head 206. The shroud 518 is further operable to be attached to the actuator 402 via the lower housing 504. The shroud 518 comprises the one or more guides 526 which are aligned with the guides 522 of the lower housing 504. When assembled, the geometry of the guides 522 and the guides 526 interact in order to align the shroud 518 for proper placement onto the lower housing 504. During assembly, as the shroud 518 is placed onto the lower housing 504, the clips 524 of the shroud 518 interlock with the protrusions 520 of the lower housing 504 in order to secure the shroud 518 to the actuator 402. In this example variation, the shroud 518 is secured to the lower housing 504 of the actuator 402 via the clips 524. In other example variations, the shroud 518 may be secured to the actuator 402 via any other fastening method, non-limiting examples of which include bolts, welds, crimps, or adhesives.

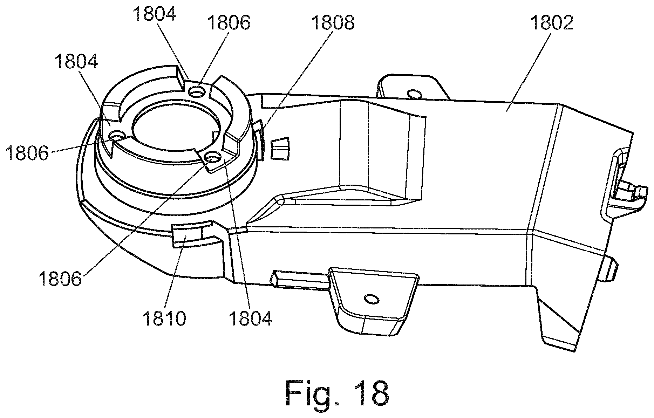

The shroud 518 is additionally operable to have the aperture 536. When the shroud 518 is assembled and connected to the actuator 402, the foot 534 is able to fit inside the aperture 536. Once the foot 534 is fit into the aperture 536 of the shroud 518, it may be connected to the mirror base 204 directly or a base frame 802 (shown in FIGs 18-24B) of the mirror base 204 to fix the actuator 402 in place.

The tilt axle 532 is operable to provide rotational movement about the axis 302 when driven by the actuator 402. The tilt axle 532 is additionally operable to be fastened to the case lower 602 or case frame 802 of the rear view device 102. The tilt axle 532 is further operable to comprise the aperture 538 to which a fastener may be attached. The tilt axle 532 is yet further operable to have a geometry that corresponds to a mounting element of the case lower 602 or the case frame 802. In this variation, the geometry of the tilt axle 532 is rectangular however, any shape may be used to allow the tilt axle 532 to be fit into a corresponding mounting element. It should be noted that the tilt axle 532, the aperture 538, and the aperture 508 are axially aligned with the axis 302 described in FIG. 3.

The foot 534 is operable to provide a connection to the mirror base 204 of the rear view device 102. The foot 534 is additionally operable to connect to the mirror base 204 through the aperture 536 in the shroud 518.

FIG. 6 shows the case lower 602 in accordance with aspects of the present disclosure. As shown in the figure the case lower 602 further comprises an aperture 604, at least one first mount 606, a second mount 608, and a further aperture 610.

The case lower 602 is operable to provide a connection to the actuator 402 and a mounting point for the case frame 802. It is not illustrated in the FIG. 6, but the case lower 602 is additionally operable to provide, at least partially, a mounting point for a device, a backing plate, a bezel, a camera, a mirror cover, a light module, a multi-functional lamp, a turn signal, a light module, an antenna and/or any other component that may be included in the rear view device.

The aperture 604 is operable to provide a space for the foot 534 of the actuator 402 to be connected to the mirror base 204 of the rear view device 102. The aperture 604 is additionally operable to have a geometry that is complimentary to that of the shroud 518 of the actuator 402.

The complimenting geometry allows the edge of the aperture 604 to rotate around the shroud 518 when the case lower 602 is moved while maintaining contact between aperture the 604 and the shroud 518. The continuous contact between the shroud 518 and the circumferential edge of the aperture 604 during movement of the case lower 602 seals the gap between the actuator 402 and the case lower 602, inhibiting the intrusion of contaminants into the mirror head 206.

Each first mount 606 is operable to provide a mounting point in order to mount the case frame 802 to the case lower 602.

The second mount 608 is operable to provide a mounting point in order to mount the tilt axle 532 of the actuator 402 to the case lower 602. The second mount 608 is additionally operable to have a geometry such that it is able to receive the tilt axle 532 of the actuator 402. The second mount 608 is further operable to contain the aperture 610 through which a fastener may be inserted to fasten the tilt axle 532 to the case lower 602. The aperture 610 is operable to receive a fastener as well as operable to be axially aligned with the axis 302 of FIG. 3. As can be seen in FIG. 6, the second mount 608 has the general shape of a rectangular slot. This slot corresponds to the rectangular shape of the tilt axle 532. During assembly, the tilt axle 532 can be rotated until it is aligned with the second mount 608 such that once aligned, the tilt axle 532 can be lifted up and fit into the mount 608 and then fixedly attached by inserting a fastener through the aperture 610 and into the aperture 538 of the tilt axle 532. After being aligned and fastened, the tilt axle 532 and the case lower 602 become rotationally locked, meaning that when the actuator 402 rotates the tilt axle 532, the case lower 602 will rotate as well.

FIG. 7 illustrates the actuator 402 being assembled to the case lower 602 in accordance with aspects of the present disclosure, and the mirror base 204, and a fastener 702 are shown.

In operation, the actuator 402 is lowered onto the case lower 602 until the shroud 518 comes into contact with the aperture 604. Since the surface of the shroud 518 matches the surface of the aperture 604, once in contact, the actuator 402 will rest on the case lower 602, via the shroud 518. At this time, tilt axle 532 is fit into the mount 608. As described above, the geometry of the tilt axle 532 corresponds to that of the mount 608 such that the tilt axle 532 may be fit into the mount 608 and then secured by inserting the fastener 702 through the aperture 610 and into the tilt axle 532. In this manner, when the tilt axle 532 is rotated, the case lower 602 will rotate as well. In this embodiment, the fastener 702 is illustrated as a pin. However, in other variations, the fastener 702 may be a bolt, weld, snap, or any other fastener or fastening method that enables the tilt axle 532 to be attached to the mount 608.

At this point, the case lower 602 has been attached to the actuator 402 via the fastener 702. However, it should be obvious to those skilled in the art an issue that would arise with using one attachment point. Further, it is desired to provide a means and a method of attachment for the rest of the components used in the device. The issue of a single attachment point between the case lower 602 and actuator 402 as well as the issue of providing attachment means for other elements is solved by the use of the case frame 802, which acts as a motor cradle by attaching the actuator 402. Such a case frame 802 for use in a device 102, 104 in accordance with aspects of the present disclosure will now be discussed with additional reference to FIGs. 8-14B.

FIG. 8 illustrates that the case frame 802 in accordance with aspects of the present disclosure includes a mount 804, an interleaved hinge 806, an aperture 808, and webs 810.

The case frame 802 is operable to provide a connection to the actuator 402 (not shown) via the interleaved hinge 806 and the aperture 808, as well as a mounting point for the case lower 602 via the mount 804. It is to be noted, although not illustrated in FIG. 8, the case frame 802 is additionally operable to provide, at least partially, a mounting point for a device, a backing plate, a bezel, a camera, a mirror cover, a light module, a multi-functional lamp, a turn signal, a light module, an antenna and/or any other component that may be included in a rear view device.

The mount 804 is operable to provide mounting points which correspond to the mount 606 of the case lower 602 in order to facilitate the attachment of the case frame 802 to the case lower 602. The mount 804 may be fastened to the mount 606 via one of a plurality of known fastening methods including bolts, clips, pins, welds, or any other known fastening method.

The interleaved hinge 806 of the case frame 802 is operable to have a geometry that is the mirror of the interleaved hinge 506 of the actuator 402 such that when assembled, the webs 810 of the interleaved hinge 806 fit in-between the webs of the interleaved hinge 506. The interleaved hinge 806 is additionally operable to be assembled with the interleaved hinge 506 such that the aperture 808 of the case frame 802 aligns with the aperture 508 of the actuator 402. The aperture 808 is operable to be axially aligned with the axis 302 of FIG. 3.

The webs 810 are operable to provide clearance between the case frame 802 and the actuator 402 during the operation of actuator 402.

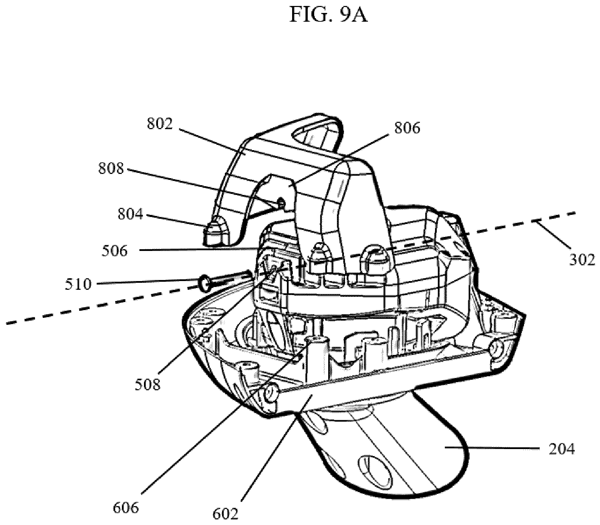

The assembly of the case frame 802 will now be discussed with additional reference to FIGs. 9A-B. FIG. 9A illustrates the case frame 802 being attached to a device in accordance with aspects of the present disclosure.

As shown, FIG. 9A includes the case frame 802 with its mount 804 and aperture 808; the case lower 602 with its mount 606; the tail-pin 510 and the aperture 508 of the upper housing 502 of the actuator 402; and the axis 302. The elements common between previous figures and FIGs. 9A-B have already been described, and for the purposes of brevity will not be described here again.

In operation, once the tilt axle 532 has been fastened to the case lower 602, the case frame 802 maybe attached. During this process, the case frame 802 is lowered on to the case lower 602 such that the mount 606 and the mount 804 are aligned, which allows the protrusions of the interleaved hinge 806 and the protrusions of the interleaved hinge 506 to be interleaved.

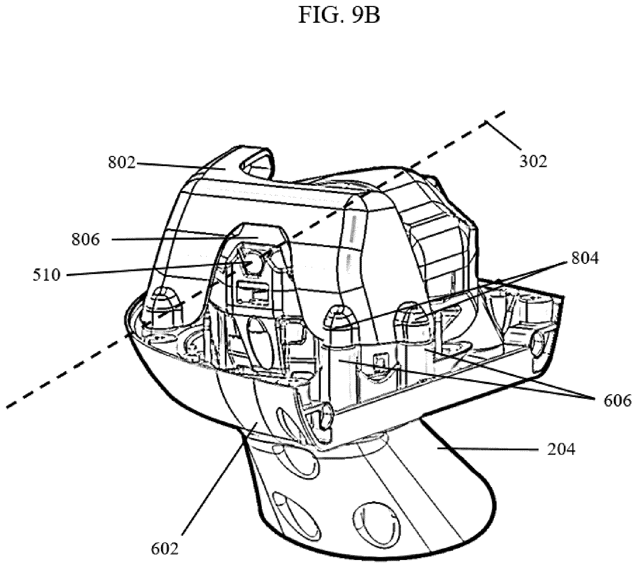

Referring to FIG. 9B, once the mount 606 and the mount 804 have been aligned, they may be fastened together to fix the case frame 802 to the case lower 602 via one of a plurality of known fastening methods including bolts, clips, pins, welds, or any other known fastening method.

With the case frame 802 securely attached to the case lower 602, the aperture 508 and the aperture 808 are axially aligned which allows the insertion of the tail-pin 510. Once inserted, the tail-pin 510 secures the case frame 802 and the case lower 602 to the actuator 402. The securing of the case frame 802 and the case lower 602 to the actuator 402 provides the second attachment point for the case lower 602. The case lower 602 is now supported on two opposing ends of a single axis, which provides a large degree of rigidity and strength. Further, without being provided a second attachment point, the outer end of the case lower 602 would be free to move or vibrate which would increase in severity as the additional components are installed in the device.

At this point, the foot 534 of the actuator 402 can be attached to the mirror base 204. In this embodiment, fasteners are insert upwards through the mirror base 204 and into the foot 534 in order to securely fix the actuator 402. In other example variations, interlocking geometry, a locking ring, or any other method of attachment may be used in order securely attach the actuator to the mirror base. As described above, in this configuration the surface geometry of the shroud 518 and the aperture 604 of the case lower 602 creates a seal which substantially prevents the intrusion of contaminants into the mirror head 206.

In this manner, rotational motion around the axis 302 is transferred from the tilt axle 532 to the case lower 602 via the mount 608 (Fig. 7). Simultaneously, the transfer of rotational motion from the tilt axle 532 about the axis 302 results in the rotation of the case lower 602 about the axis 302 on the side of the actuator 402 opposite the tilt axle 532. There are two attachment points which are used to connect the case lower 602 to the actuator 402. The first attachment point is between the tilt axle 532 and the mount 608 of the case lower 602, which enables rotation of the case lower 602 around the fastener 702. The second attachment point is between the case frame 802 and the interleaved hinge 506, via the intermediate connection made by fixing the case lower 602 to the case frame 802, which enables rotation of the case frame 802 about the tail-pin 510. The two attachment points and their rotational focal points, namely the tail-pin 510 and the fastener 702, are axially aligned to the axis 302 in order to enable smooth rotational movement. If the rotational focal points were not aligned with the tilt axle 532 along the axis 302, there would be a torque induced by the misalignment which would impede movement.

It should be noted that with the case lower 602 effectively being attached to the actuator 402, the case lower 602 cannot fall and come into contact with the mirror base 204. Any interaction or contact between the case lower 602 and the mirror base 204 would inhibit the function of the actuator 402 which could lead to costly redesigns or replacements.

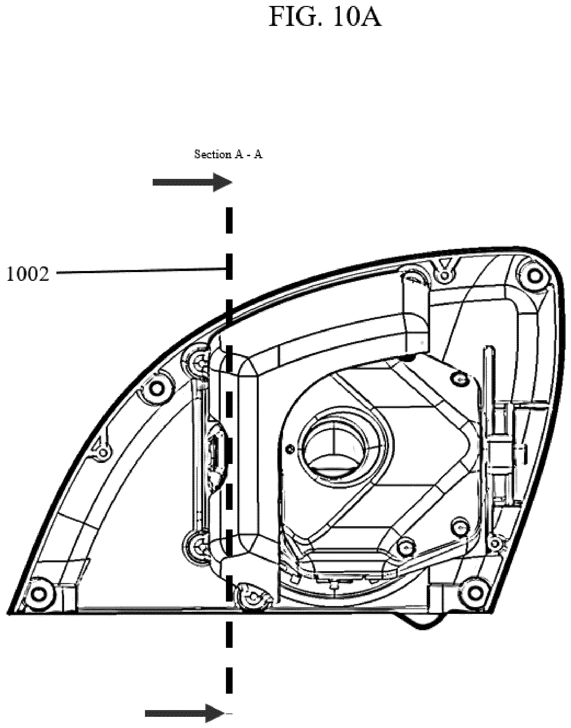

Additionally, attaching the case lower 602 to the actuator 402 in the manner described above leads to the inner circumference of the aperture 604 being held against the outer surface of the shroud 518. In this configuration, when the case lower 602 is moved via the rotation of the tilt axle 532, the edge of the aperture 604 rotates about the shroud 518 without clashing. This enables the smooth operation of the actuator 402 while maintaining a seal between the shroud 518 and the aperture 604 to prevent the intrusion of contaminants. The tilt operation of actuator 402 will now be discussed with additional reference to FIGs. 10A-10D.

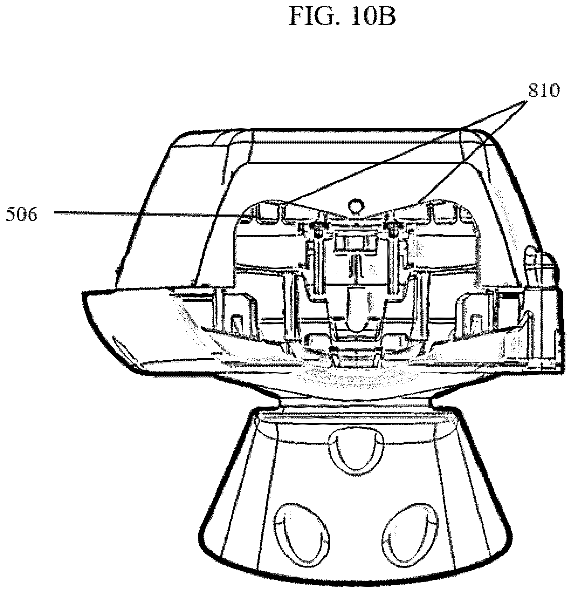

FIG. 10A illustrates a cross section 1002 cut along the rear view device 102, 104, and FIGs 10B-D illustrate head-on views along the cross section 1002 of the rear view device 102, 104 with the mirror head 206 in multiple nominal or tilted positions in accordance with aspects of the present disclosure. The elements common between previous figures and FIGs. 10A-D have already been described, and for the purposes of brevity will not be described here again. It should be noted that in FIGs. 10A-D, the tail-pin 510, the connector 512, and the camera mount 514 have been removed to provide a clear view of the interaction between the interleaved hinge 506 of the actuator 402 and the webs 810 of interleaved hinge 806 of the case frame 802.

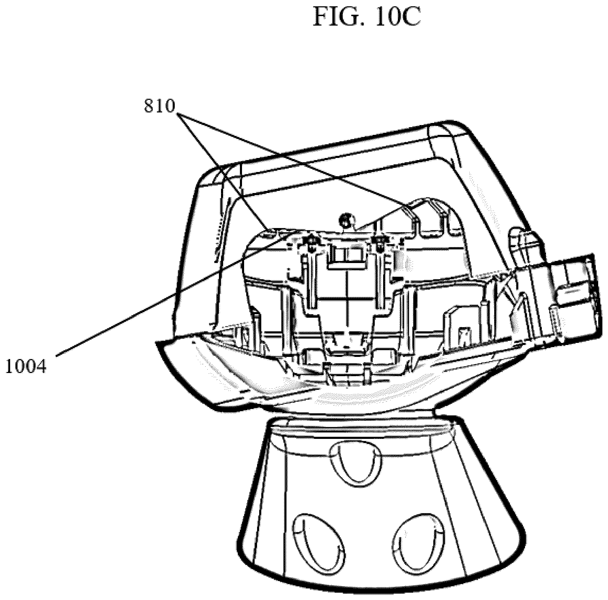

As shown in FIG. 10B, when the mirror head 206 is in a nominal position, there is a gap between the webs 810 of the interleaved hinge 806 and the interleaved hinge 506 of actuator 402. FIG. 10C shows the view of mirror head 206 when tilted upward. When powered, the tilt axle 532 of the actuator 402 begins to rotate which in turn rotates the case lower 602 since it is rotationally locked to the tilt axle 532. Opposite of the tilt axle 532 is the tail-pin 510, which provides a point around which the case frame 802 may rotate. As illustrated in FIG. 10C, as the mirror head tilts upward the gap between the left side of the webs 810 of the interleaved hinge 806 and the base of the interleaved hinge 506 begins to decrease. Once the mirror head 206 is fully tilted upward, the sloped portion of the webs 810 touches the actuator 402 at the base of the interleaved hinge 506 shown by point 1004. The geometry of the webs 810 allows the sloped portion of the webs 810 and the base of the interleaved hinge 506 to be flush when they contact. The contact between the webs 810 and the base of the interleaved hinge 506 provides a hard stop for the actuator 402 and prevents the mirror head 206 from being tilted upward any further.

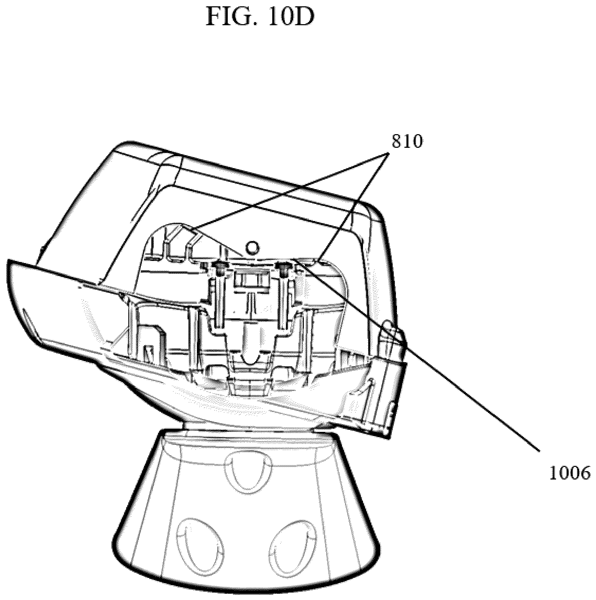

FIG. 10D, shows a view of the mirror head 206 when tilted downward. When powered, the tilt axle 532 of the actuator 402 begins to rotate in a direction opposite that shown in FIG. 10C which in turn rotates the case lower 602 since it is rotationally locked to the tilt axle 532. Opposite of the tilt axle 532 is the tail-pin 510, which provides a point around which the case frame 802 may rotate. As illustrated in FIG. 10D, as the mirror head 206 tilts downwards the gap between the right side of the webs 810 of the interleaved hinge 806 and the base of the interleaved hinge 506 begins to decrease. Once fully tilted downward, the sloped portion of the webs 810 contacts the actuator 402 at the base of the interleaved hinge 506 shown by point 1006. The geometry of the webs 810 allows the sloped portion of the webs 810 and the base of the interleaved hinge 506 to be flush when they contact. The contact between the webs 810 and the base of the interleaved hinge 506 provides a hard stop for the actuator 402 and prevents the mirror head 206 from being tilted downward any further.

In this manner, the tilting of the mirror head 206 can be achieved using the actuator 402 while preventing any unwanted contact between the case frame 802 and actuator housing 502, 504. Further, the sloped sides of the webs 810 of the case frame 802 allow contact between the case frame 802 and the actuator 402 to function as a hard stop mechanism to prevent over-travel of the mirror head 206 in the upward or downward direction during the tilt operation. Further, the tilting operation can be performed with a single actuator that also provides a powerfold operation.

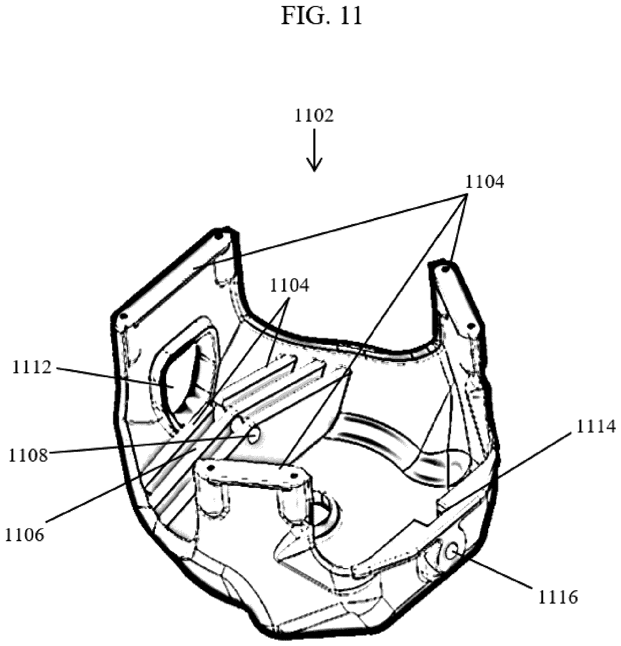

In the previous example variations, a two part system comprising a case lower and case frame were used along with a single actuator to provide both the tilting and folding operations of a rear view device. However, in other variations a spider frame may be used, which will now be described with reference to FIGs. 11-12B.

FIG. 11 illustrates a spider frame 1102 in accordance with aspects of the present disclosure, being an alternative to the cradle kind case frame 802. As shown in FIG. 11, the spider frame 1102 includes a mount 1104, an interleaved hinge 1106, an aperture 1108, a set of webs 1110, an aperture 1112, a mount 1114, and an aperture 1116.

The elements common between the case frame 802 and the spider frame 1102 are functionally similar. The mount 1104 is operable to provide an attachment mechanism to the case lower, 602; the interleaved hinge 1106 is operable to engage with the opposing interleaved hinge 506 of the actuator 402; the aperture 1108 is operable to be axially aligned with the axis 302 as well as to receive the tail-pin 510; and the webs 1110 are operable to provide clearance between the spider frame 1102 and the base of the interleaved hinge 506 of the actuator 402. The aperture 1112 is operable to provide an opening such that the tail-pin 510 may be insert into the aperture 1108.

The spider frame 1102 additionally includes several elements that were attached to the case lower 602 in previous variations, namely the mount 1114 and the aperture 1116. The mount 1114 and the aperture 1116 are functionally similar to the corresponding elements of the case lower 602. As you can see in FIG. 11, the mount 1114 has the general shape of a rectangular slot. The rectangular slot shape corresponds to the rectangular shape of the tilt axle 532. During assembly, the tilt axle 532 can be rotated until it is aligned with the mount 1114 such that once aligned, the tilt axle 532 can be lifted up and fit into the mount 1114 and then fixedly attached by inserting the fastener 702 through the aperture 1116 and into the aperture 538 of the tilt axle 532. After being aligned and fastened, the tilt axle 532 and the spider frame 1102 become rotationally locked, meaning that when the actuator 402 rotates the tilt axle 532, the spider frame 1102 will rotate as well.

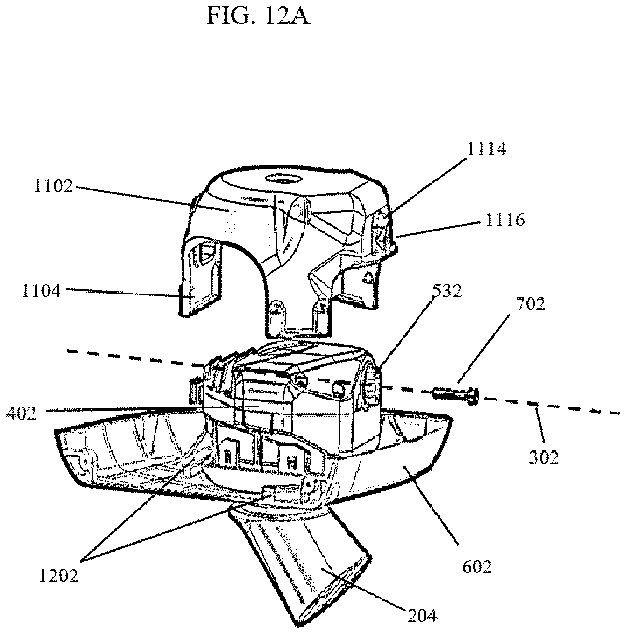

The assembly of the spider frame 1102 will now be discussed with additional reference to FIGs. 12A-B.

FIG. 12A illustrates the spider frame 1102 being attached to the rearview mirror assembly in accordance with aspects of the present disclosure. A mount 1202 of the case lower 602 is operable to provide a mounting point which corresponds to the mount 1104 of the spider frame 1102. The difference between the mount 1202 and mount the 606 described in FIG. 6 is that the geometry of the mount 1202 has been modified such that it may be attached to the mount 1104 of the spider frame 1102.

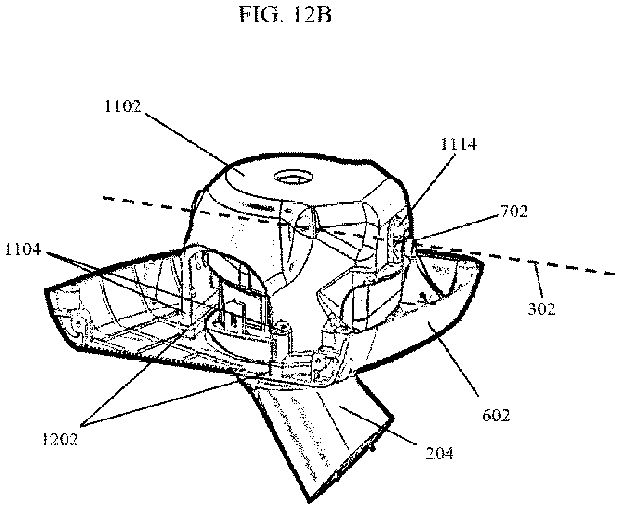

FIG. 12B illustrates the spider frame 1102 that has been attached to the rear view device in accordance with aspects of the present disclosure. Once the spider frame 1102 is attached to the actuator 402 and the case lower 602, the system may operate as described previously in FIGs. 10A-D. In short, on a first side, the tilt axle 532 is insert into the mount 1114 of the spider frame 1102 and then held in place via the insertion of the fastener 702. On the side of the actuator 402 opposite the tilt axle 532, the tail-pin 510 can be insert into the aperture 508 of the interleaved hinge 506 and the aperture 1108 of the interleaved hinge 1106. At this time, the mount 1104 of the spider frame 1102 may be fixed to the mount 1202 of the case lower 602.

Once the spider frame 1102 has been installed, the actuator 402 can be operated in order to provide movement to the mirror head 206. When the actuator 402 is powered it can begin to rotate the tilt axle 532. Since the fastener 702 and the tail-pin 510 used to attach the spider frame 1102 to the actuator 402 are axially aligned along the axis 302, the rotational motion of the tilt axle 532 can be transferred to the mirror head 206 such that it rotates about the axis 302, via the spider frame 1102 and case lower 602. The geometry of the interleaved hinges 506, 1106 of the actuator 402 and spider frame 1102 enable movement of the spider frame 1102 and case lower 602 without interference. When tilted either upward or downward to the maximum designed angle, the surface of one the sloped sides of the webs 1110 of the spider frame hinge 1106 contact the base portion of the actuator interleaved hinge 506 in order to prevent further tilting of the mirror head 206.

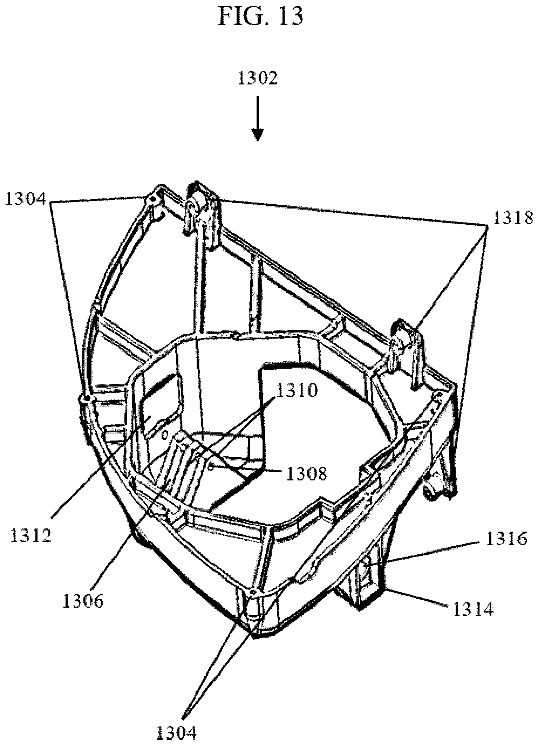

In the previous embodiments, a two part system comprising a case lower and a case frame or spider frame were used along with a single actuator to provide both the tilting and folding operations of a rear view device. However, in other variations a bezel mounted case frame 1302 may be used, which will now be described with reference to FIGs. 13-14B.

FIG. 13 illustrates the bezel mounted case frame 1302 in accordance with aspects of the present disclosure, and the bezel mounted case frame 1302 includes a mount 1304, an interleaved hinge 1306, an aperture 1308, a set of webs 1310, an aperture 1312, a mount 1314, an aperture 1316, and a mount 1318.

The elements common between the case frame 802 and the bezel mounted case frame 1302 are functionally similar. The mount 1304 is operable to provide an attachment mechanism to the case lower 602, the interleaved hinge 1306 is operable to engage with the opposing interleaved hinge 506 of the actuator 402, the aperture 1308 is operable to be axially aligned with the axis 302 as well as to receive the tail-pin 510; and the webs 1310 are operable to provide clearance between the bezel mounted case frame 1302 and the base of the interleaved hinge 506 of the actuator 402. The aperture 1312 is operable to provide an opening such that the tail-pin 510 may be insert into the aperture 1308.

The bezel mounted case frame 1302 additionally includes several elements that were attached to the case lower 602 in previous variations, namely the mount 1314 and the aperture 1316. The mount 1314 and the aperture 1316 are functionally similar to the corresponding elements of the case lower 602. As you can see in FIG. 13, the mount 1314 has the general shape of a rectangular slot. The rectangular slot shape corresponds to the rectangular shape of the tilt axle 532. During assembly, the tilt axle 532 can be rotated until it is aligned with the mount 1314 such that once aligned, the tilt axle 532 can be lifted up and fit into the mount 1314 and then fixedly attached by inserting the fastener 702 through the aperture 1316 and into the aperture 538 of the tilt axle 532. After being aligned and fastened, the tilt axle 532 and the bezel mounted case frame 1302 become rotationally locked, meaning that when the actuator 402 rotates the tilt axle 532, the bezel mounted case frame 1302 will rotate as well.

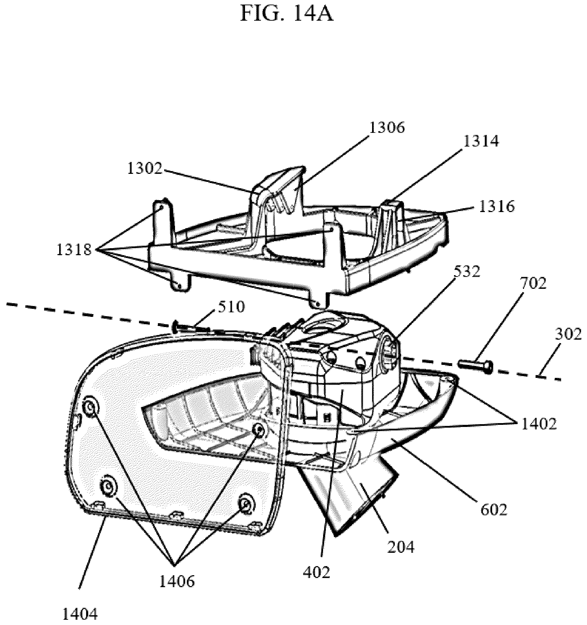

The assembly bezel mounted case frame 1302 will now be discussed with additional reference to FIGs. 14A-B.

FIG. 14A illustrates the bezel mounted case frame 1302 being attached to the rear r view device in accordance with aspects of the present disclosure. A mount 1402, a bezel like backing plate assembly 1404 and a mount 1406 are shown in addition to the mount 1304, the interleaved hinge 1306, the mount 1314, the aperture 1316, the mount 1318, the fastener 702, the case lower 602, the tilt axle 532, the actuator 402, and the axis 302. The elements common between previous figures and FIGs. 14A-B have already been described, and for the purposes of brevity will not be described here again.

The mount 1402 of the case lower 602 is operable to provide a mounting point which corresponds to the mount 1304 of the bezel mounted case frame 1302. The difference between the mount 1402 and the mount 606 described in FIG. 6 is that the mount 1402 has been modified such that it may be attached to the mount 1304 of the bezel mounted case frame 1302.

The backing plate assembly 1404 is operable to provide or support a means of reflecting the view from the rearward of the vehicle 100 towards the driver of the vehicle 100. In this example variation, the backing plate assembly 1404 is provided as a complete assembly, in other variations, the backing plate assembly 1404 may be provided as a frame or mounting portion to which a glass or reflective element may be attached at a later time. The backing plate assembly 1404 is additionally operable to comprise the mount 1406 which allow attachment to the mount 1318 of the bezel mounted case frame 1302.

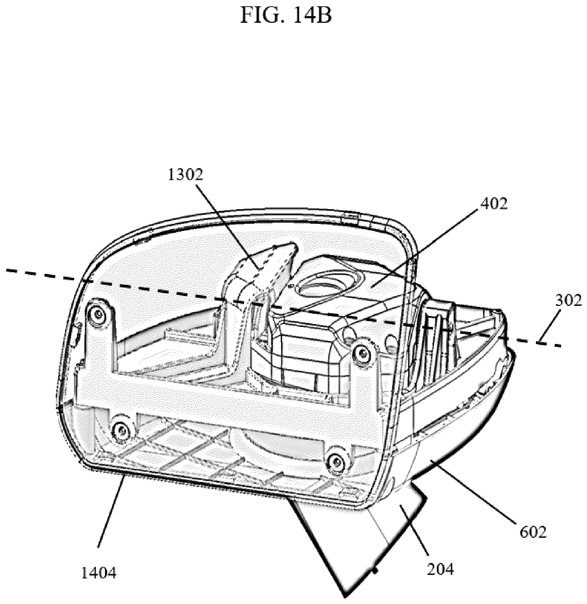

FIG. 14B illustrates the bezel mounted case frame 1302 that has been attached to the rear view device in accordance with aspects of the present disclosure. As shown in FIG. 14B, once the bezel mounted case frame 1302 is attached to the actuator 402 and the case lower 602, the system may operate as described previously in FIGs. 10A-D. In short, the tilt axle 532 is insert into the mount 1314 of the bezel mounted case frame 1302 and then held in place via the insertion of the fastener 702. On the side of the actuator 402 opposite the tilt axle 532, the tail-pin 510 can be insert into the aperture 508 of the interleaved hinge 506 and the aperture 1308 of the interleaved hinge 1306. At this time, the mount 1304 of the bezel mounted case frame 1302 may be fixed to the mount 1402 of the case lower 602. The backing plate assembly 1404 may then be attached to the bezel mounted case frame 1302 by fixing the mount 1406 to the mount 1318.

Once the bezel mounted case frame 1302 has been installed the actuator can be operated. When the actuator 402 is powered it can begin to rotate the tilt axle. Since the fastener 702 and tail-pin 510 used to attach the bezel mounted case frame 1302 to the actuator 402 are axially aligned along the axis 302, the rotational motion of the tilt axle 532 can be transferred to the entire mirror head 206 such that it rotates around the axis 302, via the bezel mounted case frame 1302 and case lower 602. The geometry of the interleaved hinges 506, 1306 of both the actuator 402 and the bezel mounted case frame 1302 enable movement of the bezel mounted case frame 1302 and case lower 602 without interference. When tilted either upward or downward to the maximum designed angle, the surface of one side of the sloped sides of the webs 1310 of the bezel mounted case frame 1302 contact the base portion of the actuator interleaved hinge 506 in order to prevent further tilting of the mirror head.

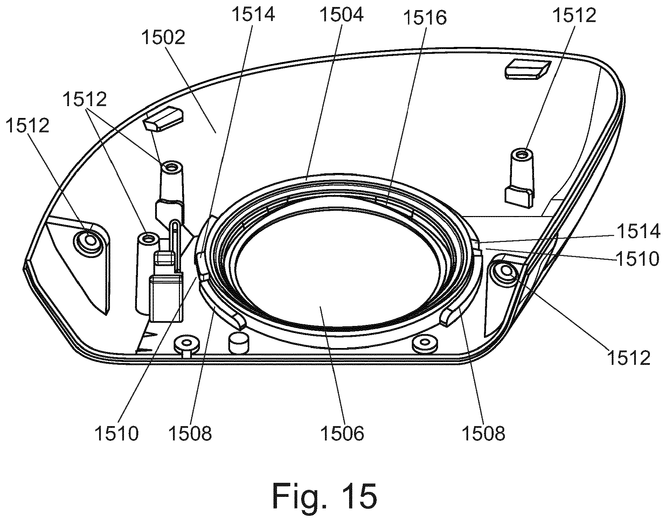

In further embodiments, a rear view device with an actuator for mirror adjustment may be provided with a gasket to seal any gap between the shroud 518 and case lower 602, which will now be described with reference to FIGs. 15-24B.

FIG. 15 illustrates a case lower 1502 and a gasket 1504 in accordance with aspects of the present disclosure. As shown, the case lower 1502 includes an aperture 1506, a guide 1508, at least one recess 1510, and attachment points 1512. The gasket 1504 includes an at least one protrusion 1514 and a seal 1516. The aperture 1506 is operable to provide an opening through which a mirror base (not shown) can be connected to an actuator (not shown). Each attachment point 1512 is operable to provide a point to which a case frame (not shown) may be attached to the case lower 1502. The guide 1508 is provided on the case lower 1502 with a curvature that matches the curvature of the gasket 1504. When at least one protrusion 1514 of the gasket 1504 is aligned with at least one recess 1510 of the guide 1508, the gasket 1504 can be installed on the case lower 1502. The guide 1508 and the insertion of the at least one protrusion 1514 into the at least one recess 1510 fixes the gasket 1504 in place relative to the case lower 1502.

The gasket 1504 and the seal 1516 are described as individual elements, however in this form they are combined as a single element. During production, the gasket 1504 and the seal 1516 can be produced as a single element using a double injection molding technique (2K or two-shot molding). 2K molding is a manufacturing process in which a complicated molded part can be produced by a single molding machine use two different materials. In this embodiment, the gasket 1504 is molded from PP-GF material, however in other variations the gasket 1504 may be molded from ASA, ABS, PMMA or any other material which may be molded as part of a 2K process. Additionally in this embodiment, the seal 1516 is molded from TPE material, however in other variations the seal 1516 may be molded from silicone, PVC, or any other material which may be molded as part of a 2K process.

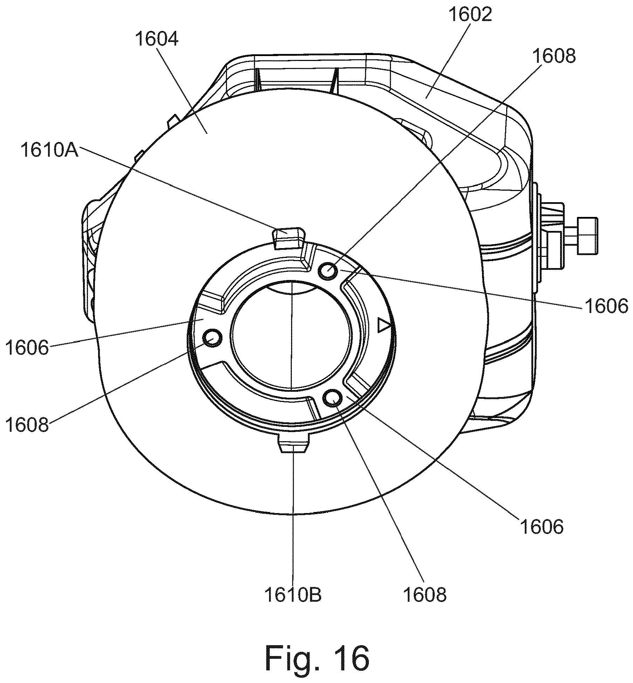

FIG. 16 illustrates a bottom view of an actuator 1602 and a shroud 1604 in accordance with aspects of the present disclosure. The actuator 1602 includes an extension 1606 and an at least one aperture 1608, where in this embodiment , the at least one aperture 1608 includes three apertures. The shroud 1604 includes a first protrusion 1610A and a second protrusion 1610B. The extension 1606 is operable to be received within a recess of a base frame (not shown) that has a corresponding geometry. The matching geometries ensures the correct alignment between the actuator 1602 and the mirror base. The at least one aperture 1608 is operable to receive a fastener (not shown) in order to fix the actuator 1602 to the base frame of the rear view device. The shroud 1604 is attached to the actuator 1602 as described above in FIGs. 5A-B and for purposes of brevity, will not be described here again. The protrusions 1610A, 1610B extend through the aperture 1506 of the case lower 1502 of FIG. 15 when the actuator 1602 is arranged on the case lower 1502.

In this embodiment, the shroud 1604 is molded from PBT-GF material, however in other variations the shroud 1604 may be molded from ASA, ABS, PMMA or any other material which may be molded.

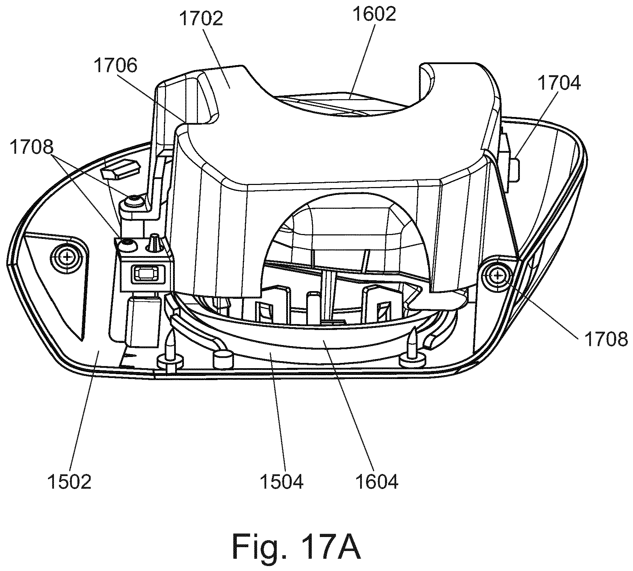

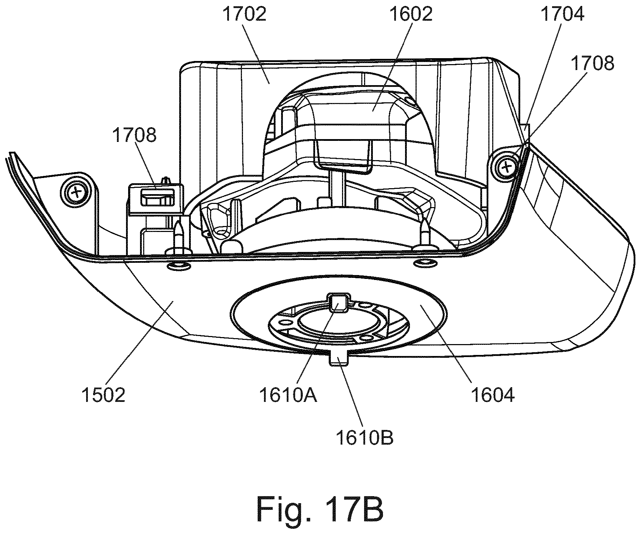

FIG. 17A illustrates a top-down view and FIG. 17B illustrates a bottom-up view of the actuator 1602 fixed to the case lower 1502 in accordance with aspects of the present disclosure. As shown in FIG. 17A, the case frame 1702 has a first attachment element which in this variation is attachment point 1704, and a second attachment element which in this variation is attachment point 1706. The case frame 1702 is attached to the actuator 1602 via the attachment points 1704, 1706, where the first attachment point 1704 attaches to the tilt axle 532 of the actuator as explained with respect to FIG. 5 and the attachment point 1706 attaches to the interleaved hinge 506 as explained with respect to FIG. 5. The case frame 1702 is attached to the actuator 1602 via the first attachment point 1704 and the second attachment point 1706 as described above with respect to FIGs. 5-14B, and for purposes of brevity the details of those methods will not be discussed again here.

The actuator 1602 is then arranged onto the case lower 1502 such that the shroud 1604 abuts the seal 1516 of the gasket 1504. Once the shroud 1604 abuts the seal 1516 (not shown), the case frame 1702 may be attached to the case lower 1502 via the mounting points 1708. Since the case frame 1702 is attached to the actuator 1602, when the case frame 1702 is further fixed to the case lower 1502, the actuator 1602 is also coupled to the case lower 1502 keeping the shroud 1604 in abutment with the seal 1516 of the gasket 1504. The abutment between the shroud 1604 and the seal 1516 seals and prevents the intrusion of contaminants such as water, dust, salt, or other fluid or debris into the mirror head.

Referring to FIG. 17B, it can be seen that, when the actuator 1602 is attached to the case lower 1502, the first and second protrusions 1610A, 1610B extend through the aperture 1506 of the case lower 1502. Additionally, the extension 1606 of the shroud 1604 and the at least one aperture 1608 are accessible through the aperture 1506 of the case lower 1502 for attachment to a mirror base (not shown).

In this embodiment, the shroud 1604 abuts the seal 1516 of the gasket 1504. As described above with respect to FIGs. 2-14B, the actuator 1602 is operable to rotate the case lower 1502 along two separate axes, which also in this embodiment are the axis 202 and the axis 302. During rotation around the axis 202, both the shroud 1604 and the case lower 1502 rotate simultaneously with the actuator 1602. During the rotation around the axis 202, there is no relative movement between the shroud 1604 and the case lower 1502 or between the shroud 1604 and the seal 1516 and the gasket 1504.

During the rotation of the case lower 1502 about the axis 302, the shroud 1604 remains static as it is fixedly attached to the actuator 1602. As the case lower 1502 rotates so does the gasket 1504, which results in the seal 1516 moving across the surface of the shroud 1604. Since the seal 1516 and the shroud 1604 are in abutment, the materials chosen for the seal 1516 and the shroud 1604 therefore affect the ability of the case lower 1502 to be rotated about the axis 302 by the actuator 1602. The material of the shroud 1604 and the seal 1516 can be chosen to increase or decrease the ability of the actuator 1602 to rotate the case lower 1502 about the axis 302.

Additionally, the requirements by a manufacturer or customer for the surface of the shroud 1604 may lead to a material being used that is not suitable for the actuator 1602. By having the shroud 1604 separate from the actuator 1602, these surface requirements may be met without impeding the integrity or functionality of the actuator 1602.

The attachment of the actuator 1602 to a mirror base will now be described with reference to FIGs. 18-20.

FIG. 18 illustrates a mirror base with a base frame 1802 in accordance with aspects of the present disclosure. As shown, the base frame 1802 includes one or more recesses 1804, at least one aperture 1806, and a protrusion 1808. Each recess 1804 has a contour that matches the contour of the extension 1606 of the actuator 1602 such that when the actuator 1602 is arranged on the base frame 1802, the matching contours encourages the alignment of the at least one aperture 1806, where in this embodiment the at least one aperture 1806 includes three apertures of base frame 1802 matching with apertures 1608 of the actuator 1602. The alignment between the apertures 1806, 1608 allows for the insertion of a fastener in order to fixedly attach the actuator 1602 to the base frame 1802. In this embodiment , the fastener used to fixedly attach the actuator 1602 to the base frame 1802 is a bolt (not shown). However, in other variations, the fastener used may be a pin, weld, clip or any other fastener or fastening method that can fixedly attach the actuator 1602 to the base frame 1802. The aperture 1810 is provided on the base frame 1802 as an attachment point for a breakface gasket (not shown).

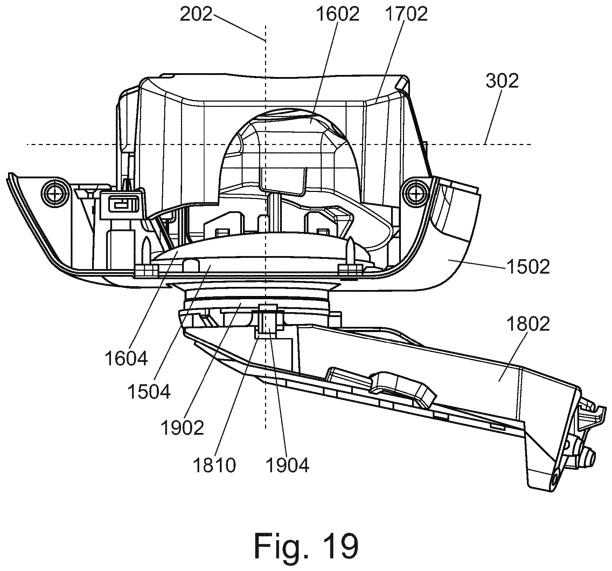

FIG. 19 illustrates a front view of the actuator 1602 attached to the base frame 1802 in a nominal position in accordance with aspects of the present disclosure. As shown in FIG. 19, the base frame 1802 is provided with a breakface gasket 1902. The breakface gasket 1902 includes a fastener 1904, which in this example variation is a clip, insert into the aperture 1810 of the base frame 1802. The fastener 1904 inserted into the aperture 1810 fixedly secures the breakface gasket 1902 to the base frame 1802. When the actuator 1602 is attached to the base frame 1802, the breakface gasket 1902 abuts the shroud 1604 in order to seal the gap between the base frame 1802 and the actuator 1602. Additionally, the case frame 1702 is coupled to the actuator 1602 as well as the case lower 1502 so that the shroud 1604 abuts the seal 1516 of the gasket 1504. Further, the actuator 1602 has been attached to the base frame 1802 by first aligning the extension 1606 of the actuator 1602 with the recess 1804 of the base frame 1802. Once aligned, a fastener (not shown) is insert through the at least one aperture 1806 and into the at least one aperture 1608 to fixedly attach the actuator 1602 to the base frame 1802.

The inclusion of the gasket 1504 and the breakface gasket 1902 into the rear view device using the actuator 1602 improves the vibrational frequency of the rear view device. Without the gasket 1504 or the breakface gasket 1902, the only support between the base frame 1802 and the actuator 1602 would be between the extensions 1606 of actuator 1602 and the recesses 1804 of the base frame 1802. Fasteners would additionally be inserted through the at least one aperture 1806 of the base frame 1802 and into the at least one aperture 1608 of the actuator 1602 in order to fix the actuator 1602 to the base frame 1802. The arrangement of the extensions 1606 and recesses 1804 as well as the insertion of the fasteners into the at least one aperture 1608 and the at least one aperture 1806 would primarily provide support along the axis 202, while providing very little structural support along the axis 302.

The abutment between the shroud 1604 and the breakface gasket 1902 as well as the abutment between the shroud 1604 and the seal 1516 of the gasket 1504 provides additional support along the axis 202 as well as the axis 302. This additional support along the axis 302 will reduce the vibration amplitude of the case lower 1502 as well as any other elements attached to the case lower 1502, which in this embodiment includes a mirror reflective element (not shown).

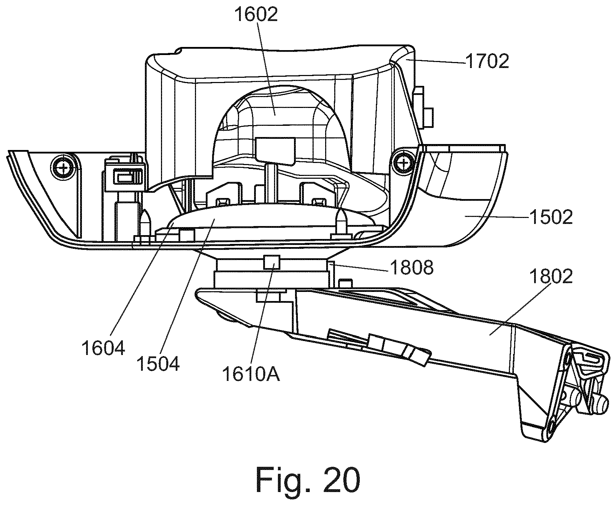

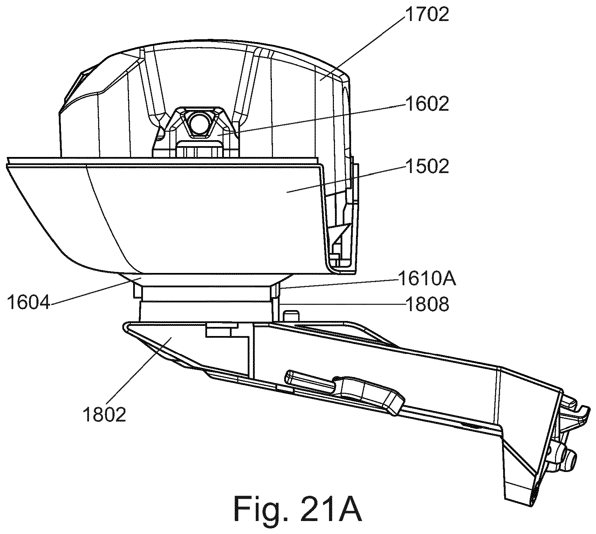

FIG. 20 illustrates the assembly of FIG. 19 with the breakface gasket 1902 removed for the purposes of clarity. When the actuator 1602 is fixedly attached to the base frame 1802, the protrusion 1610A and the protrusion 1610B (not shown) of the shroud 1604 extend through the case lower 1502 towards the base frame 1802 until they are in the same plane as the protrusion 1808. With the protrusion 1610A, the protrusion 1610B, and the protrusion 1808 in the same plane, they may interact with each other to prevent continued travel of the mirror head during rotation from an impact. Further description of the protrusion 1610A, the protrusion 1610B, and the protrusion 1808 acting as hard stops to prevent rotation during an impact will now be discussed with additional reference to FIGs. 21A-22B.

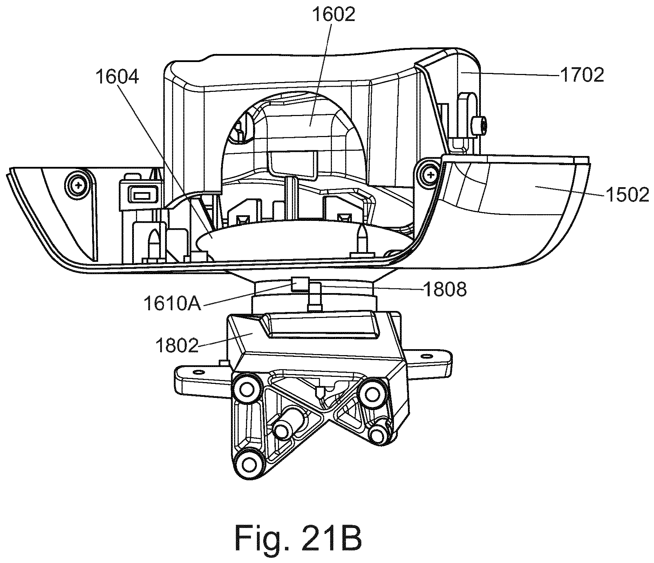

FIG. 21A illustrates a front view of the shroud 1604 hitting a hard stop in the rearward direction in accordance with aspects of the present disclosure. FIG. 21B illustrates a side view of the shroud hitting a hard stop in the rearward direction in accordance with aspects of the present disclosure. For purposes of clarity, the breakface gasket 1902 has been removed from FIGs. 21A-B.

As shown in FIGs. 21A-B, when a force is applied to a portion of a mirror head, which in this example is represented by the case lower 1502, the force applied will cause the entire mirror head to rotate. In this embodiment, the force applied to the case lower 1502 rotates the mirror head towards the rear of the equipped vehicle. Since the actuator 1602, the shroud 1604, and the case frame 1702 are fixedly attached to the case lower 1502 they will rotate as the case lower 1502 rotates. The case lower 1502 will continue to rotate until the protrusion 1610A of the shroud 1604 abuts the protrusion 1808 of the base frame 1802. The abutment between the protrusion 1610A and the protrusion 1808 acts as a hard stop and prevents further rotation of the case lower 1502.

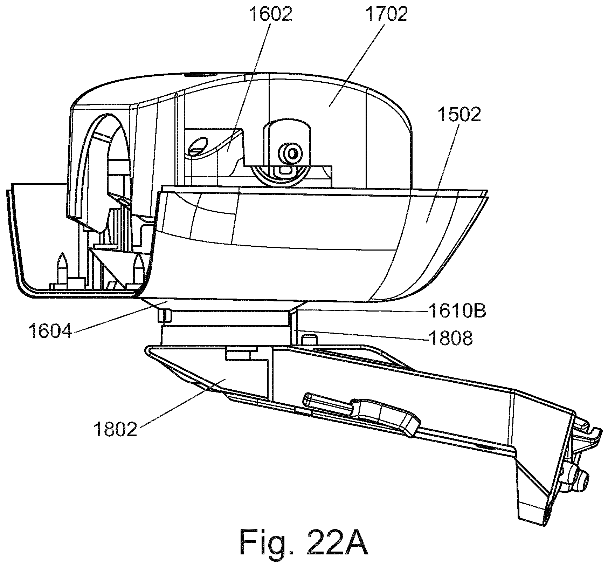

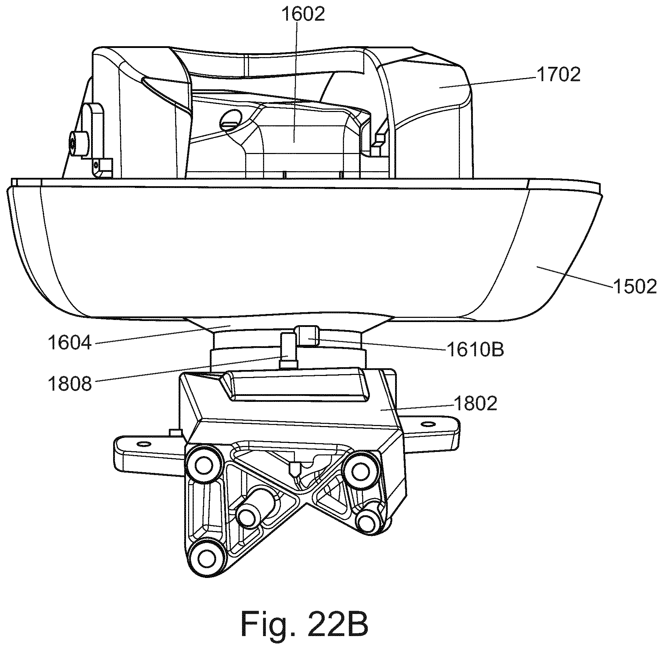

FIG. 22A illustrates a front view of the shroud 1604 hitting a hard stop in the forward direction in accordance with aspects of the present disclosure. FIG. 22B illustrates a side view of the shroud 1604 hitting a hard stop in the forward direction in accordance with aspects of the present disclosure. For purposes of clarity, the breakface gasket 1902 has been removed from FIGs. 22A-B. Similar to FIGs. 21A-B above, when a force is applied to a portion of a mirror head, the force applied will cause the entire mirror head to rotate. In this embodiment, the force applied to the case lower 1502 rotates the mirror head towards the front of the equipped vehicle. Since the actuator 1602, the shroud 1604, and the case frame 1702 are fixedly attached to the case lower 1502, they will rotate as the case lower 1502 rotates until the protrusion 1610B of the shroud 1604 abuts the protrusion 1808 of the base frame 1802. The abutment between the protrusion 1610B and the protrusion 1808 acts as a hard stop and prevents further rotation of the case lower 1502.

The operation of the actuator 1602 moving a mirror head along two different axes is identical to the operation of the actuator 402 discussed above with respect to FIGs. 2A-14B. The actuator 1602 is operable to adjust the mirror head along two separate axes to perform both a tilt function and fold function. In this embodiment, the actuator 1602 performs a folding function around the axis 202 and a tilt function around the axis 302. The protrusion 1808 is arranged on the base frame 1802 and is fixed in place relative to the axis 202 and the axis 302, while the protrusion 1610A and the protrusion 160B of the shroud 1604 are fixed only along the axis 302. Therefore, when the actuator 1602 starts rotating, the shroud protrusions 1610A, 1610B rotate as well. The actuator 1602 will continue rotating until there is a flush contact between the protrusion 1610A or the protrusion 1610B and the protrusion 1808.

If the protrusion 1610A and the protrusion 1610B were not fixed along the axis 302, the protrusion 1610A or the protrusion 1610B could be rotated along the axis 302 such that they longer made a flush contact with the protrusion 1808 during rotation around the axis 202. As an example, if the protrusion 1610A were moved from the shroud 1604 and arranged on the case lower 1502 such that it was able to contact the protrusion 1808, any rotation of the case lower about the axis 302 would result in a non-flush contact between the protrusion 1610A and the protrusion 1808 as the case lower 1502 was rotated around the axis 202. Non-flush contact between the protrusion 1610A and the protrusion 1808 could result in damage to either part such as increase wear or shorter lifespan, and could possibly lead to damage of other parts of the rear view device due to a lack of hard stop functionality.

As described in FIGs. 21A-22B, the protrusion 1610A and the protrusion 1610B are arranged on the shroud 1604 such that they act as a hard stop in a first direction or a second direction. In this embodiment, the first direction is towards the rearward of the vehicle and the second direction is toward the forward of the vehicle. Further, in this embodiment, the protrusion 1610A and the protrusion 1610B are arranged on the shroud 1604 such that they contact the protrusion 1808 after 70 degrees of rotation. After rotating 70 degrees in the rearward or forward direction from a nominal position, the protrusion 1610A or the protrusion 1610B will contact the protrusion 1808 to prevent further rotation. However, depending on the manufacturer or customer, a different angle of rotation may be required. Still further in this embodiment, a different shroud can be attached to the actuator that has the protrusion 1610A and the protrusion 1610B arranged in different locations such that the protrusion 1610A contacts the protrusion 1808 after 80 degrees of rotation in the rearward direction and the protrusion 1610B contacts the protrusion 1808 after 60 degrees of rotation in the forward direction. A shroud may be produced with the protrusion 1610A and the protrusion 1610B arranged to act as a hard-stop after any angle that may be requested by a customer. In this manner, it possible to use a single actuator for all rear view devices, while only changing the shroud to deliver the rear view device with different maximum degrees of rotation.

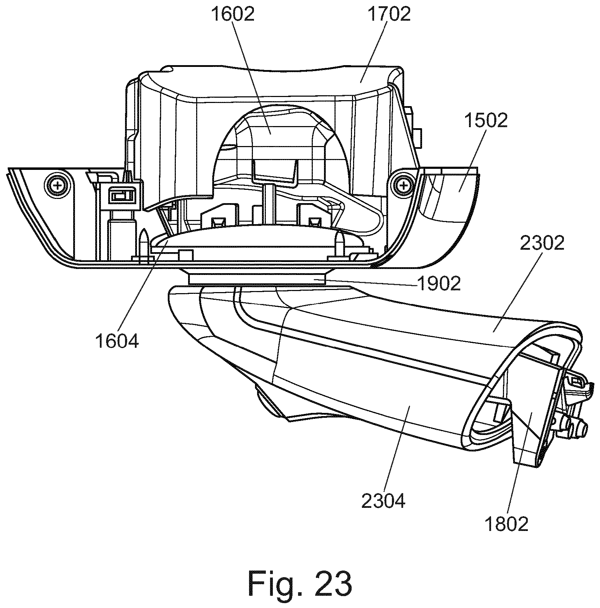

FIG. 23 illustrates a base cover of a rear view device in accordance with aspects of the present disclosure, with an upper base cover 2302 and a lower base cover 2304 attached to the base frame 1802. When attached to the base frame 1802, the upper edge of the upper base cover 2302 and the lower base cover 2304 abut the breakface gasket 1902, creating a seal that prevents the intrusion of particles or contaminants from entering the rear view device through the gap between the breakface gasket 1902 and the base frame 1802.

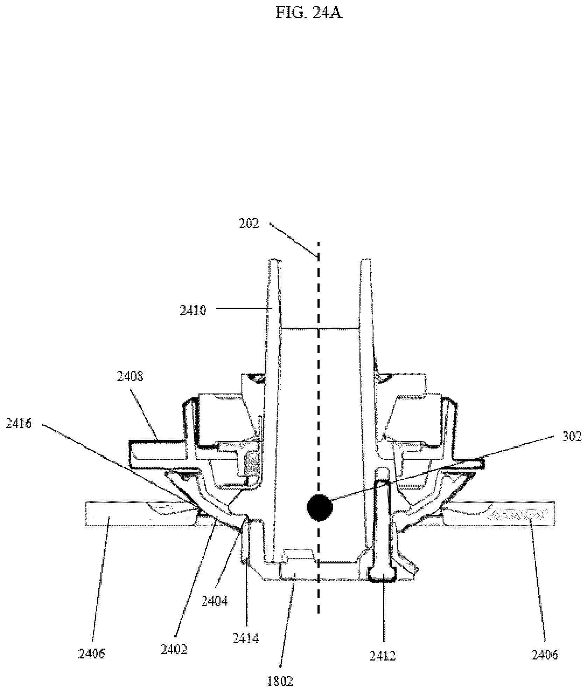

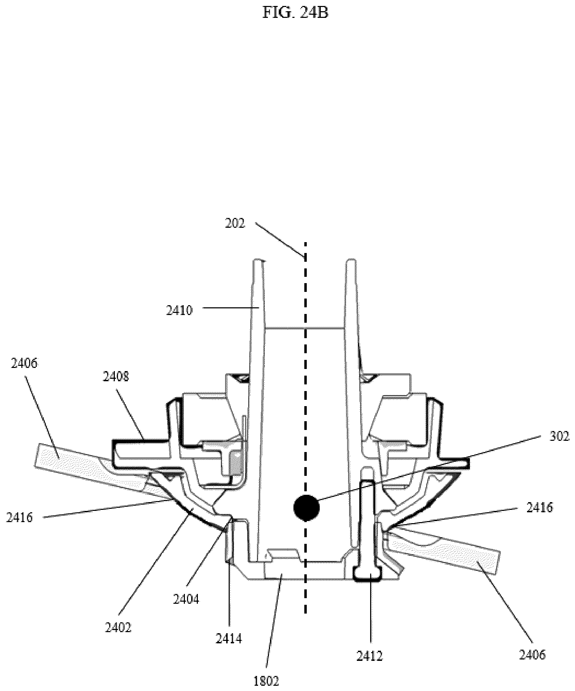

In the previous embodiments, a shroud has been provided for use with an actuator wherein the shroud is fixedly attached to the actuator. In this arrangement, the shroud travels with the actuator, however in other variations, a shroud may be provided that is static and not attached to an actuator. A static shroud 2402 will now be discussed with reference to FIG. 24A/B.

FIG. 24A illustrates the static shroud 2402 for a rear view device in accordance with aspects of the present disclosure. As shown in FIG. 24A, the base frame 1802 is provided with the shroud 2402. The shroud 2402, is clamped between the base frame 1802 and a shaft 2410 of an actuator 2408 as shown at point 2404. Once clamped between the base frame 1802 and the shaft 2410, a fastener 2412 can be inserted through the base frame 1802 and into the shaft 2410 in order to fix the shroud 2402 and the shaft 2410 to the base frame 1802. With the shroud 2402 fixed in place, a seal is created between the shroud 2402 and a base cover 2414 as well as between the shroud 2402 and the mirror head 2406, which prevents the intrusion of contaminants such as water, dust, salt, or other fluid or debris into the mirror head 2406.

During operation, the actuator 2408 may rotate the mirror head 2406 about the axis 202 or the axis 302 as described with respect to FIGs. 1-14B. During the rotation around the axis 202, the mirror head 2406 now rotates relative to the shroud 2402. Since the mirror head 2406 is rotating around the axis 202 and the shroud 2402 is remaining static, the mirror head 2406 will contact the shroud 2402 at a contact point 2416 around the circumference of the shroud 2402.

FIG. 24B illustrates the rotation of the mirror head 2406 around the static shroud 2402 in accordance with aspects of the present disclosure. During operation, the actuator 2408 may be required to rotate the mirror head 2406 about the axis 302 as described above with respect to FIGs. 1-14B. The operation of the mirror head 2406 rotating about the axis 302 is identical whether a static shroud or a shroud attached to an actuator is used. As the mirror head 2406 rotates about the axis 302, the case lower 602, 1502 of mirror head 2406 traverses up one side of the shroud 2402 and down the opposing side of the shroud 2402. During the rotation about the axis 302, the mirror head 2406 remains in contact as shown by the contact point 2416 around the circumference of the shroud 2402.

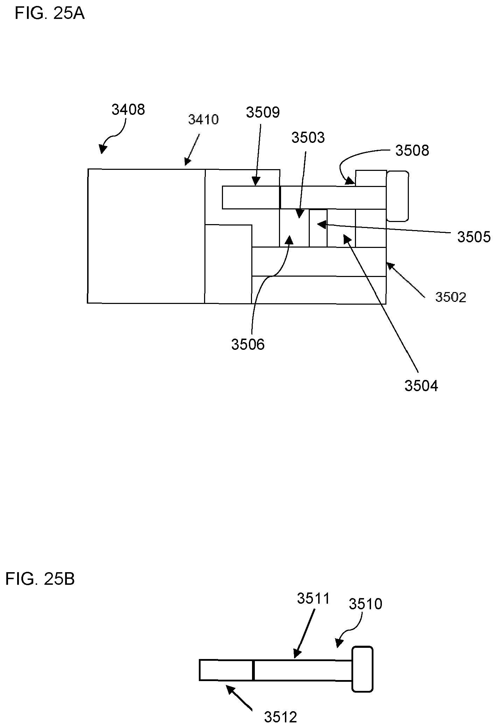

FIGs. 25A, 25B illustrate an alternative hinge 3506 provided by the upper housing 3502 of an actuator 3408, the shaft 3410 of which also being shown. The hinge 3506 comprises two recesses 3503, 3504 on both sides of a projection 3505, and being arranged between two walls of the upper housing 3502, with the walls and the projection 3505 acting as the webs discussed above. But for facilitating the introduction of a tail pin 3510, the upper housing 3502 provides a single opening 3508 for inserting the tail pin 3510 such that a tilt bearing surface 3511 of the tail pin 3510 is supported by the projection 3505, whereas a screw area 3512 of the tail pin 3510 is adapted to be screwed into a further opening 3509 of the upper housing 3502 provided with an internal thread. This construction not only facilitates the insertion of the tail pin 3510, but at the same time also provides sufficient strength of the connection by making usage of the screw area 3512.

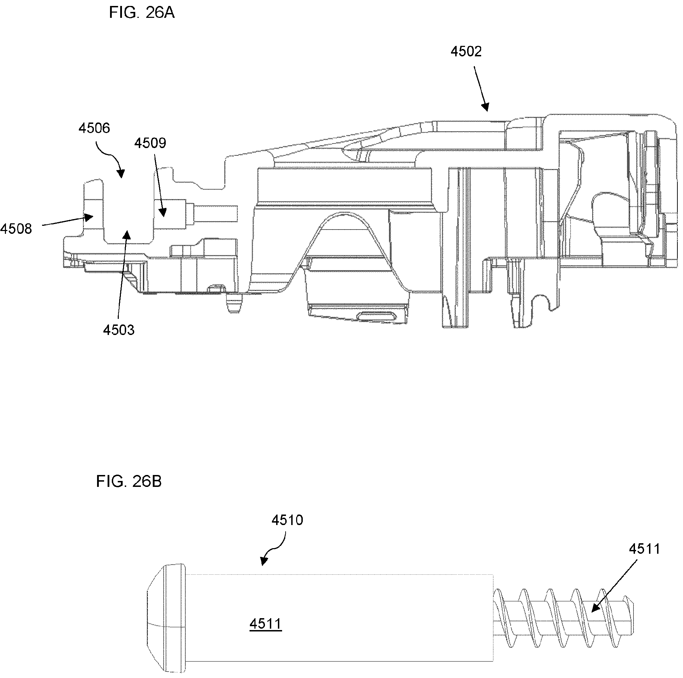

FIGs. 26A, 26B show alternatives of FIGs. 25A, 25B. In particular, an upper housing 4502 with two walls can be seen, the first wall being provided with an opening 4508 and the second wall being provided with an opening 4509 with an internal thread. The two walls of the upper housing 4502 are arranged to leave a recess 4503 there between. A tail pin 4510 is adapted to be inserted with a tilt bearing surface 4511 into the opening 4508 and with a screw area 4511 in the opening 4509. The hinge 4506 with the two walls and the recess 4508 functions as the hinge with the webs discussed above.

The two alternative constructions of the hinge 3506, 4506 formed with the upper housing 3502, 4502 of the actuator 3408 discussed with respect to FIG.s 25A-26B, interact with complementary hinges provided by case frames (not shown) in an analogue manner as described for the embodiments shown in FIGs 5A-24B, as more or less just the number of leaves of the interleaved hinges have been reduced for the benefit of the assembling process. Thus, the hinges 3506, 4506 each still act as an interleaved hinge allowing a tilting while also providing hard stops as described in detail with respect to FIG. 10A-10D. The number of the leaves of the hinges can vary as the recesses between neighboring leaves and the extension of the leaves control the tilting range. While e.g. FIG. 5A shows three leaves of the hinge 506 with a reduction of the extensions thereof towards the edge of the upper actuator housing 502 , which leads to a sloped surface, wherein three slot like recesses are formed between said three leaves, e.g. FIG. 26A shows one leave of the hinge 4506 providing one recess 4503 which is sufficient to fulfill the above outlined functions for controlling the tilt range. The selection of the number of leaves as well as the distances between neighboring leaves, which determine the recesses, as well the heights of the leaves depends on the desired tilt range.

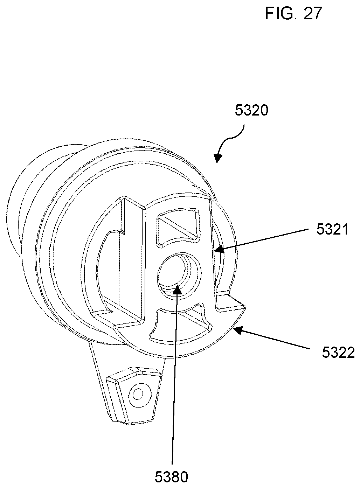

FIG. 27 shows an alternative tilt axle 5320 having a central aperture 5380 for inserting a fastener (not shown) as described with respect to the embodiments above. The difference between the tilt axle 5320 and the tilt axle 532 in particular shown in FIG. 5B is the geometry, in particular the cross section thereof. The tilt axle 5320 is substantially T-shaped with a tapered portion 5321 and a rounded portion 5322. This geometry secures a safe attachment and easy insertion into the respective mount either provided by a case lower (not shown) or a case frame (not shown). Said mount can be in form of a slot with a geometry complementary to the one of the tilt axle 5320.

The rear view device 102 and the rear view device 104 may comprise desired elements not shown in the figures. Desired elements may include a camera module, an indicator module, a light module, a blind side detection module, a blind side indicator, a multi-functional light module, an external light module, an internal light module, a front light, a back light, a fog light, a brake light, an acceleration light, a turn signal, a logo lamp, a front area illumination light, a ground illumination light, a puddle light, a flash light, a navigation light, a position light, an emergency light, a spotlight, a green light, a red light, a warning light, a turn signal light module, an approach light, a search light, an information light, a display, an antenna and/or any combination thereof. Some of the desired elements may also be integrated such that they may operate behind or through a coating such as a partially transparent chromium base coating. An example of a partially transparent chromium based coating for polymeric substrates is described in U.S. patent application No. 14/936,024, filed on Nov. 9, 2015 for COATED POLYMERIC SUBSTRATES and in U.S. patent application No. 15/124,310, filed on Feb. 20, 2015 for DECORATIVE COATINGS FOR PLASTIC SUBSTRATES, which are all hereby incorporated herein by reference.

Some of the desired elements may provide an indication signal to a driver of a vehicle equipped with one of the rear view device 102 or the rear view device 104. An example of providing an indication signal to a driver is described in U.S. patent application No. 16/522,074, filed on July 25'2019 for AUTOMOBILE EXTERIOR REAR VIEW MIRROR BLIND SPOT WARNING INDICATION DEVICE and in U.S. patent application No. 15/000,733, filed on Jan. 19, 2016 for LIGHT GUIDING DEVICE, which are all hereby incorporated herein by reference.

In summary, conventional rear view devices provide actuation of components along multiple axes. In order to enable actuation along multiple axes, a second actuator is used which adds engineering and assembly complexity as well as cost to the assembly.

Aspects of the present disclosure provides a system for creating a seal between an actuator and mirror head using a gasket, seal, and shroud. The seal prevents the intrusion of contaminants such as water, dust, salt, or other fluid or debris into the mirror head. The attachment of a mirror head to a mirror base having a gasket creates another seal between the mirror base and shroud in order to and prevent the intrusion of contaminants such as water, dust, salt, or other fluid or debris into the mirror head.

### REFERENCE SIGN LIST

- 100: Vehicle
- 102: Rear View Device
- 104: Rear View Device
- 202: Axis
- 204: Mirror Base
- 206: Mirror Head
- 208: Line
- 302: Axis
- 304: Line
- 402: Actuator
- 502: Upper Housing
- 504: Lower Housing
- 506: Interleaved Hinge
- 508: Aperture
- 510: Tail-Pin
- 512: Connector
- 514: Camera Mount
- 516: Fastener
- 518: Shroud / spherical Seat
- 520: Protrusions
- 522: Guides
- 524: Clips
- 526: Guides
- 528: Fastener
- 530: Aperture
- 532: Tilt Axle
- 534: Foot
- 536: Aperture
- 538: Aperture
- 602: Case lower
- 604: Aperture
- 606: First Mount
- 608: Second Mount
- 610: Aperture
- 702: Fastener
- 802: Case Frame
- 804: Mount
- 806: Interleaved Hinge
- 808: Aperture
- 810: Web
- 1102: Cross Section A-A
- 1104: Point
- 1106: Point
- 1102: Spider Frame
- 1104: Mount
- 1106: Interleaved Hinge
- 1108: Aperture
- 1110: Webs
- 1112: Aperture
- 1114: Mount
- 1116: Aperture
- 1202: Mount
- 1302: Bezel Mounted Case Frame
- 1304: Mount
- 1306: Interleaved Hinge
- 1308: Aperture
- 1310: Webs
- 1312: Aperture
- 1314: Mount
- 1316: Aperture
- 1318: Mount
- 1402: Mount
- 1404: Backing Plate Assembly
- 1406: Mount
- 1502: Case Lower
- 1504: Gasket
- 1506: Aperture
- 1508: Guide
- 1510: At Least One Recess
- 1512: Attachment Point
- 1514: At Least One Protrusion
- 1516: Seal
- 1602: Actuator
- 1604: Shroud
- 1606: Extension
- 1608: At Least One Aperture
- 1610A: Protrusion
- 1610B: Protrusion
- 1702: Case Frame cradle
- 1704: Attachment Point
- 1706: Attachment Point
- 1708: Mounting Points
- 1802: Base Frame
- 1804: Recess
- 1806: At Least One Aperture
- 1808: Protrusion
- 1810: Aperture
- 1902: Breakface Gasket
- 1904: Clip
- 2302: Upper Base Cover
- 2304: Lower Base Cover
- 2402: Shroud
- 2404: Contact Point
- 2406: Mirror Head
- 2408: Actuator
- 2410: Shaft
- 2412: Fastener
- 2414: Base Cover
- 2416: Contact Point
- 3408: Actuator
- 3410: Shaft
- 3502: Upper Housing
- 3503: Recess
- 3504: Recess
- 3505: Projection
- 3506: Hinge
- 3508: Opening
- 3509: Opening with Thread
- 3510: Tail Pin
- 3511: Tilt Bearing Surface
- 3512: Screw Area
- 4502: Upper Housing
- 4503: Recess
- 4506: Hinge
- 4508: Opening
- 4509: Opening with Thread
- 4510: Tail Pin
- 4511: Tilt Bearing Surface
- 4512: Screw Area
- 5320: Tilt Axle
- 5380: Aperture
- 5321: Tapered Portion
- 5322: Rounded Portion

## Claims

1. A rear view device (102, 104) for a vehicle (100), said rear view device (102, 104) comprising:
• a base (204, 1802, 2302, 2304) adapted to be mounted to a side of the vehicle (100), wherein said base (204, 1802, 2302, 2304) has a first attachment end disposed at the side of the vehicle (100) and a second attachment end disposed opposite the first attachment end;
• a head (206, 2406) for supporting at least one means for providing a rearward field of view to a driver of the vehicle (100) and being disposed at said second attachment end of said base (204, 1802, 2302, 2304), wherein said head (206, 2406) comprises an aperture (536) through which said base (204, 1802, 2302, 2304) can be accessed;
• an actuator (402, 1602, 2408, 3408) comprising a foot (534) and/or at least one extension (1606) to be connected to the base (204, 1802, 2302, 2304), a first attachment means, like protrusions (520), and a tilt axle (532, 5320);
• a shroud (518, 1604, 2402) comprising second attachment means, like clips (524) or protrusions (1610A, 1610B), adapted to attach to said first attachment means of the actuator (402, 1602, 2408, 3408) to fixedly attach said shroud (518, 1604, 2402) to said actuator (402, 1602, 2408);
• a case lower (602, 1502), wherein the actuator (402, 1602, 2408, 3408) rests on the case lower (602, 1502), via the shroud (518, 1604, 2402); and
• a case frame (802, 1102, 1302, 1702) mounted on the case lower (602, 1502);
**characterized in that**
the actuator (402, 1602, 2408, 3408) comprises a hinge (506, 3506, 4506); and
the case frame (802, 1102, 1302) comprises a complementary hinge (806, 1106, 1306), wherein the hinge (506, 3506, 4506) of the actuator (402, 3408) is adapted to be engaged by the complementary hinge (806, 1106, 1306) provided by the case frame (802, 1102, 1302).

2. The rear view device of claim 1, wherein
• the tilt axle (532, 5320) of the actuator (402, 1602, 2408, 3408) is adapted to be fixedly attached to the case lower (602) and/or the case frame (802, 1102, 1302, 1702) such that, when the tilt axle (532, 5320) is rotated, the case lower (602, 1502) and the case frame (802, 1102, 1302, 1702) also rotate, resulting in a rotation of the head (206, 2406), and/or
• the case lower (602, 1502) provides an aperture (604, 1506) adapted to provide a space for the foot (534) or the at least one extension (1606) of the actuator (402, 1602, 2408, 3408) which is adapted to have a geometry complimentary to that of the shroud (518, 1604) such that the edge of the aperture (604, 1506) may rotate around the shroud (518, 1604) when the case lower (602, 1502) is moved while maintaining contact between the aperture (604, 1506) and the shroud (518, 1604) sealing the gap between the actuator (402, 1602) and the case lower (602, 1502).

3. The rear view device of claim 1 or 2, wherein
• the case lower (602, 1502) comprises at least one first mount (606) adapted to provide a mounting or attachment point (1512) in order to mount the case frame (802, 1702) to the case lower (602, 1502) via one or more first mounts (804) of the case frame (802, 1702), and/or
• the case lower (602) comprises at least one second mount (608) which is adapted to provide a mounting point in order to mount the tilt axle (532, 5320) of the actuator (402, 1602, 2408, 3408) to the case lower (602), preferably via at least one fastener (702) passing through an aperture (538, 5380) of the tilt axle (532, 5320).

4. The rear view device of claim 3, wherein
• the geometry of the tilt axle (532, 5320) corresponds to that of the second mount (608) of the case lower (602) such that the tilt axle (532, 5320) may be fit into said second mount (608), and/or
• the fastener (702) is adapted to be inserted through an aperture (610) in the second mount (608) into the tilt axle (532) for fastening the attachment of the tilt axle (532) to the case lower (602), and/or
• a first attachment point is provided between the tilt axle (532) and the second mount (608) of the case lower (602), which enables rotation of the case lower (602) around the fastener (702).

5. The rear view device of claim 1 or 2, wherein
• the case lower (602) comprises at least one first mount (1202, 1402) adapted to provide a mounting point in order to mount the case frame (1102, 1302) to the case lower (602) via one or more first mounts (1104, 1304) of the case frame (1102, 1302), and/or
• the case frame (1102, 1302, 1702) comprises at least one second mount (1114, 1314) which is adapted to provide a mounting or attachment point (1704) in order to mount the tilt axle (532, 5320) of the actuator (402) to the case frame (1102, 1302, 1702), preferably via at least one fastener (702) passing through an aperture (538, 5380) of the tilt axle (532, 5320).

6. The rear view device of claim 5, wherein
• the geometry of the tilt axle (532, 5320) corresponds to that of the second mount (1114, 1314) of the case frame (1102, 1302, 1702) such that the tilt axle (532, 5320) may be fit into said second mount (1114, 1314), and/or
• the fastener (702) is adapted to be inserted through an aperture (1116, 1316) in said second mount (1114, 1314) into the tilt axle (532, 5320) for fastening the attachment of the tilt axle (532, 5320) to the case frame (1102, 1302, 1702), and/or
• a first attachment point is provided between the tilt axle (532, 5320) and said second mount (1114, 1314) of the case frame (1102, 1302, 1702) which enables rotation of the case frame (1102, 1302, 1702) around the fastener (702).

7. The rear view device of any one of the claims 4 to 6, wherein
the geometry of the tilt axle (532, 5320) is rectangular, trapezoidal, tapered and/or T-shaped, with preferably the T-shaped tilt axle (5320) having a tapered portion (5321) and a rounded portion (5322).

8. The rear view device of any one of the preceding claims, wherein
the case frame (802, 1102) is adapted to be lowered on to the case lower (602) such that
• each first mount (606, 1402) of the case lower (602) and one first mount (804, 1114, 1304) of the case frame (802, 1102, 1302) are aligned for attachment, and/or
• the hinge (806, 1106, 1306) of the case frame (802, 1102, 1302) engages the hinge (506, 3506, 4506) of the actuator (402), and/or
• at least one aperture (808, 1108, 1308) of the hinge (806, 1106, 1306) of the case frame (802, 1102, 1302) is axially aligned with at least one aperture (508, 3508, 4508) of the hinge (506, 3506, 4506) of the actuator (402, 1602, 2408, 3408) which allows the insertion of a tail-pin (510, 3510, 4510), and/or
• a second attachment point is provided between the case frame (802, 1102, 1302) and the hinge (506, 3506, 4506) of the actuator (402), via the intermediate connection made by fixing the case lower (602) to the case frame (802, 1102, 1302).

9. The rear view device of any one of the preceding claims, wherein,
the case lower (602) and/or the case frame (802, 1102, 1302) is adapted to provide, at least partially, a mounting point for at least one of a mirror assembly, a backing plate, a bezel, a camera, a mirror cover, a multi-functional lamp, a turn signal, a light module and/or an antenna.

10. The rear view device of any one of the preceding claims, wherein
the head (206, 2406) may rotate around a tilt axis (302), and
the head (206, 2406) may rotate around a fold axis (202),
with both rotations being driven by the actuator (402, 1602, 2408).

11. The rear view device of claim 10, wherein
the tail-pin (510, 3510, 4510) and the fastener (702) are axially aligned to the tilt axis (302), and
a shaft (2410) of the actuator (2408) is axially aligned to the fold axis (202).

12. The rear view device of any one of the preceding claims, wherein
• the hinge (506, 3506, 4506) of the actuator (402, 1602, 2408, 3408) provides at least one recess (3503, 3504, 4503) adapted to receive at least one extension of the hinge (806, 1106, 1306) of the case frame (802, 1102, 1302), and/or
• the hinge (506, 3506, 4506) of the actuator (402, 1602, 2408, 3408) provides at least one projection (3505) adapted to be inserted into at least one recess of the hinge (806, 1106, 1306) of the case frame (802, 1102, 1302), and/or
• the hinge (506, 3506, 4506) of the actuator (402, 3408) is an interleaved hinge, in particular providing webs, and the hinge (806, 1106, 1306) of the case frame (802, 1102, 1302) is an interleaved hinge, in particular providing webs (810, 1110, 1310).

13. The rear view device of claim 12, wherein
• the hinge (506, 3506, 4506) of the actuator (402, 1602, 2408, 3408) and/or the hinge (806, 1106, 1306) of the case frame (802, 1102, 1302) comprises at least one projection (3503) or webs (810, 1110, 1310) providing a stop point (1004, 1006) for the actuator (402, 1602, 2408, 3408) for preventing the mirror head (206, 2406) from further tiling, upwards and/or downwards, and/or
• the at least one recess (3503, 3504, 4503) and/or the at least one projection (3503) or webs (810, 1110, 1310) are adapted to provide clearance between the case frame (802, 1102, 1302) and the actuator (402, 1602, 2408, 3408) during the operation of actuator (402, 1602, 2408, 3408).

14. The rear view device of claim 12 or 13, wherein
the interleaved hinges (506, 3506, 4506, 806, 1106, 1306) determine the tilt range, via the number of projecting leaves, the distances between neighboring leaves, which determine the recesses (3503, 3504, 4503), and/or the heights of the leaves.

15. The rear view device of any one of the preceding claims, wherein
the tail pin (3510, 4510) comprises a tilt bearing surface (3511, 4511) and a screw area (3512, 4512) adapted to be screwed into an opening (3509, 4509) of the actuator (3408), in particular
a housing or housing part of the actuator (3408).

16. The rear view device of any one of the preceding claims, wherein
the shroud (1604) has at least one protrusion (1610A, 1610B) adapted to extend through the case lower (1502) towards a base frame (1802) of the base, and
the base frame (1802) has at least one protrusion (1808),
with the protrusions (1610A, 1610B, 1808) of the shroud (1604) and the base frame (1802) being arranged in the same plane such that may interact for providing a stop point for the head (206, 2406) from rotation during an impact with an obstacle.

17. The rear view device of any one of the preceding claims, wherein
• the base frame (1802) of the base is provided with at least one aperture (1806) being operable to receive a fastener (2412) in order to fix the actuator (1602, 2408) to the base frame (1802), and/or
• the base frame (1802) of the base is provided with at least one recess (1804) being operable to receive at least one extension (1606) of the actuator (1602).

18. The rear view device of any one of the preceding claims, further comprising
• a first gasket (1504) to seal a gap between the shroud (518) and case lower (602), and/or
• a second gasket (1902), in particular in form of a breakface gasket, to seal a gap between the base frame (1802) of the base and the actuator (1602).

19. The rear view device of claim 18, wherein
• the first gasket (1504) includes at least one protrusion (1514) and a first seal (1516), and/or
• the first gasket (1504) is formed as a single element by a 2K molding process with a first seal (1516).

20. The rear view device of claim 19, wherein
the case lower (1502) includes an aperture (1506), which is operable to provide an opening through which the mirror base (1802) can be connected to the actuator (1602), and a guide (1508) with a curvature that matches the curvature of the gasket (1504) and with at least one recess (1510),
such that, when the at least one protrusion (1514) of the gasket (1504) is aligned with the at least one recess (1510) of the guide (1508), the gasket (1504) may be fixed on the case lower (1502) by inserting the at least one protrusion (1514) into the at least one recess (1510).

21. The rear view device of claim 19 or 20, wherein
• the actuator (1602) is arranged on the case lower (1502) such that the shroud (1604) abuts the first seal (1516), and/or
• the case frame (1702) is attached to the case lower (1502) and to the actuator (1602) such that the actuator (1602) is coupled to the case lower (1502) keeping the shroud (1604) in abutment with the first seal (1516).

22. The rear view device of any one of the claims 18 to 21, wherein the second gasket (1902) includes a fastener (1904) for fixedly securing the second gasket (1902) to the base frame (1802), with preferably the fastener (1904) being adapted to be insert into an aperture (1810) of the base frame (1802).

23. The rear view device of claim 22, wherein,
when the actuator (1602) is attached to the base frame (1802), the second gasket (1902) abuts the shroud (1604).

24. The rear view device of any one of the claim 19 to 23, wherein
the base includes an upper base cover (2302) and a lower base cover (2304), and,
when the upper base cover (2302) and the lower base cover (2304) are attached to the base frame (1802), the upper base cover (2302) and the lower base cover (2304) abut the second gasket (1902), creating a second seal.

25. The rear view device of any one of the preceding claims, wherein
the actuator (402) comprises an upper housing (502, 3502. 4502) and a lower housing (504), which are joined or fastened together, and
• the shroud (518) is placed onto the lower housing (504), with preferably clips (524) of the shroud (518) interlock with protrusions (520) of the lower housing (504), in order to secure the shroud (518) to the actuator (402), and/or
• the tilt axle (532, 5320) is adapted to be connected to the upper housing (502, 3502, 4502).

26. The rear view device of any one of the preceding claims, further comprising
• a connector (512) adapted to be inserted into the actuator (402) for delivering power, in particular from the vehicle (100), and/or
• a camera mount (514) adapted to connect to the actuator (402), in particular to the lower housing (504) of the actuator (402).

27. A vehicle (100) with at least one rear view device according to any one of the preceding claims.

## Patentansprüche

1. Rückblickvorrichtung (102, 104) für ein Fahrzeug (100), wobei die Rückblickvorrichtung (102, 104) umfasst:
• eine Basis (204, 1802, 2302, 2304), die dazu ausgelegt ist, an einer Seite des Fahrzeugs (100) montiert zu sein, wobei die Basis (204, 1802, 2302, 2304) ein erstes Anbringungsende, das an der Seite Fahrzeugs (100) angeordnet ist, und ein zweites Anbringungsende, das gegenüber dem ersten Anbringungsende angeordnet ist, aufweist;
• einen Kopf (206, 2406) zum Tragen mindestens eines Mittels zum Bereitstellen eines rückwärtigen Sichtfelds für einen Fahrer des Fahrzeugs (100), der an dem zweiten Anbringungsende der Basis (204, 1802, 2302, 2304) angeordnet ist, wobei der Kopf (206, 2406) eine Öffnung (536) umfasst, durch die hindurch die Basis (204, 1802, 2302, 2304) zugänglich ist;
• einen Aktuator (402, 1602, 2408, 3408), umfassend einen Fuß (534) und/oder mindestens eine mit der Basis (204, 1802, 2302, 2304) zu verbindende Erweiterung (1606), ein erstes Anbringungsmittel, wie Vorsprünge (520), und eine Neigungsachse (532, 5320);
• eine Verkleidung (518, 1604, 2402), umfassend zweite Anbringungsmittel, wie Clips (524) oder Vorsprünge (1610A, 1610B), die dazu ausgelegt sind, an dem ersten Anbringungsmittel des Aktuators (402, 1602, 2408, 3408) angebracht zu sein, um die Verkleidung (518, 1604, 2402) fest an dem Aktuator (402, 1602, 2408) anzubringen;
• einen Gehäuseunterteil (602, 1502), wobei der Aktuator (402, 1602, 2408, 3408) über die Verkleidung (518, 1604, 2402) auf dem Gehäuseunterteil (602, 1502) aufliegt; und
• einen Gehäuserahmen (802, 1102, 1302, 1702), der an dem Gehäuseunterteil (602, 1502) montiert ist;
**dadurch gekennzeichnet, dass**
der Aktuator (402, 1602, 2408, 3408) ein Scharnier (506, 3506, 4506) umfasst; und
der Gehäuserahmen (802, 1102, 1302) ein komplementäres Scharnier (806, 1106, 1306) umfasst,
wobei das Scharnier (506, 3506, 4506) des Aktuators (402, 3408) dazu ausgelegt ist, von dem komplementären Scharnier (806, 1106, 1306), das von dem Gehäuserahmen (802, 1102, 1302) bereitgestellt wird, in Eingriff genommen zu werden.

2. Rückblickvorrichtung nach Anspruch 1, wobei
• die Neigungsachse (532, 5320) des Aktuators (402, 1602, 2408, 3408) dazu ausgelegt ist, fest an dem Gehäuseunterteil (602) und/oder dem Gehäuserahmen (802, 1102, 1302, 1702) angebracht zu sein, sodass sich, wenn die Neigungsachse (532, 5320) gedreht wird, der Gehäuseunterteil (602, 1502) und der Gehäuserahmen (802, 1102, 1302, 1702) ebenfalls drehen, was eine Drehung des Kopfes (206, 2406) zur Folge hat, und/oder
• der Gehäuseunterteil (602, 1502) eine Öffnung (604, 1506) bereitstellt, die dazu ausgelegt ist, einen Raum für den Fuß (534) oder die mindestens eine Erweiterung (1606) des Aktuators (402, 1602, 2408, 3408) bereitzustellen, der/die dazu ausgelegt ist, eine Geometrie komplementär zu der der Verkleidung (518, 1604) aufzuweisen, sodass sich der Rand der Öffnung (604, 1506) um die Verkleidung (518, 1604) drehen kann, wenn der Gehäuseunterteil (602, 1502) bewegt wird, während der Kontakt zwischen der Öffnung (604, 1506) und der Verkleidung (518, 1604), die den Spalt zwischen dem Aktuator (402, 1602) und dem Gehäuseunterteil (602, 1502) abdichtet, aufrechterhalten wird.

3. Rückblickvorrichtung nach Anspruch 1 oder 2, wobei
• der Gehäuseunterteil (602, 1502) mindestens eine erste Befestigung (606) umfasst, die dazu ausgelegt ist, einen Befestigungs- oder Anbringungspunkt (1512) bereitzustellen, um den Gehäuserahmen (802, 1702) über eine oder mehrere erste Befestigungen (804) des Gehäuserahmens (802, 1702) an dem Gehäuseunterteil (602, 1502) zu befestigen, und/oder
• der Gehäuseunterteil (602) mindestens eine zweite Befestigung (608) umfasst, die dazu ausgelegt ist, einen Befestigungspunkt bereitzustellen, um die Neigungsachse (532, 5320) des Aktuators (402, 1602, 2408, 3408) an dem Gehäuseunterteil (602) zu befestigen, vorzugsweise über mindestens ein Befestigungsmittel (702), das durch eine Öffnung (538, 5380) der Neigungsachse (532, 5320) verläuft.

4. Rückblickvorrichtung nach Anspruch 3, wobei
• die Geometrie der Neigungsachse (532, 5320) der der zweiten Befestigung (608) des Gehäuseunterteils (602) entspricht, sodass die Neigungsachse (532, 5320) in die zweite Befestigung (608) eingesetzt werden kann, und/oder
• das Befestigungsmittel (702) dazu ausgelegt ist, durch eine Öffnung (610) in der zweiten Befestigung (608) in die Neigungsachse (532) eingesetzt zu werden, um die Anbringung der Neigungsachse (532) an dem Gehäuseunterteil (602) zu befestigen, und/oder
• ein erster Anbringungspunkt zwischen der Neigungsachse (532) und der zweiten Befestigung (608) des Gehäuseunterteils (602) bereitgestellt ist, was eine Drehung des Gehäuseunterteils (602) um das Befestigungsmittel (702) ermöglicht.

5. Rückblickvorrichtung nach Anspruch 1 oder 2, wobei
• der Gehäuseunterteil (602) mindestens eine erste Befestigung (1202, 1402) umfasst, die dazu ausgelegt ist, einen Befestigungspunkt bereitzustellen, um den Gehäuserahmen (1102, 1302) über eine oder mehrere erste Befestigungen (1104, 1304) des Gehäuserahmens (1102, 1302) an dem Gehäuseunterteil (602) zu befestigen, und/oder
• der Gehäuserahmen (1102, 1302, 1702) mindestens eine zweite Befestigung (1114, 1314) umfasst, die dazu ausgelegt ist, einen Befestigungs- oder Anbringungspunkt (1704) bereitzustellen, um die Neigungsachse (532, 5320) des Aktuators (402) an dem Gehäuserahmen (1102, 1302, 1702) zu befestigen, vorzugsweise über mindestens ein Befestigungsmittel (702), das durch eine Öffnung (538, 5380) der Neigungsachse (532, 5320) verläuft.

6. Rückblickvorrichtung nach Anspruch 5, wobei
• die Geometrie der Neigungsachse (532, 5320) der der zweiten Befestigung (1114, 1314) des Gehäuserahmens (1102, 1302, 1702) entspricht, sodass die Neigungsachse (532, 5320) in die zweite Befestigung (1114, 1314) eingesetzt werden kann, und/oder
• das Befestigungsmittel (702) dazu ausgelegt ist, durch eine Öffnung (1116, 1316) in der zweiten Befestigung (1114, 1314) in die Neigungsachse (532, 5320) eingesetzt zu werden, um die Anbringung der Neigungsachse (532, 5320) an dem Gehäuserahmen (1102, 1302, 1702) zu befestigen, und/oder
• ein erster Anbringungspunkt zwischen der Neigungsachse (532, 5320) und der zweiten Befestigung (1114, 1314) des Gehäuserahmens (1102, 1302, 1702) bereitgestellt ist, was die Drehung des Gehäuserahmens (1102, 1302, 1702) um das Befestigungsmittel (702) ermöglicht.

7. Rückblickvorrichtung nach einem der Ansprüche 4 bis 6, wobei
die Geometrie der Neigungsachse (532, 5320) rechteckig, trapezförmig, verjüngt und/oder T-förmig ist, wobei die T-förmige Neigungsachse (5320) vorzugsweise einen verjüngten Abschnitt (5321) und einen abgerundeten Abschnitt (5322) aufweist.

8. Rückblickvorrichtung nach einem der vorangehenden Ansprüche, wobei der Gehäuserahmen (802, 1102) dazu ausgelegt ist, auf den Gehäuseunterteil (602) abgesenkt zu werden, sodass
• jede erste Befestigung (606, 1402) des Gehäuseunterteils (602) und eine erste Befestigung (804, 1114, 1304) des Gehäuserahmens (802, 1102, 1302) zur Anbringung ausgerichtet sind und/oder
• das Scharnier (806, 1106, 1306) des Gehäuserahmens (802, 1102, 1302) in das Scharnier (506, 3506, 4506) des Aktuators (402) eingreift und/oder
• mindestens eine Öffnung (808, 1108, 1308) des Scharniers (806, 1106, 1306) des Gehäuserahmens (802, 1102, 1302) axial mit mindestens einer Öffnung (508, 3508, 4508) des Scharniers (506, 3506, 4506) des Aktuators (402, 1602, 2408, 3408) ausgerichtet ist, was das Einsetzen eines Anschlagstifts (510, 3510, 4510) erlaubt, und/oder
• ein zweiter Anbringungspunkt zwischen dem Gehäuserahmen (802, 1102, 1302) und dem Scharnier (506, 3506, 4506) des Aktuators (402) über die durch Befestigen des Gehäuseunterteils (602) an dem Gehäuserahmen (802, 1102, 1302) hergestellte Zwischenverbindung bereitgestellt ist.

9. Rückblickvorrichtung nach einem der vorangehenden Ansprüche, wobei
der Gehäuseunterteil (602) und/oder der Gehäuserahmen (802, 1102, 1302) dazu ausgelegt ist/sind, zumindest teilweise einen Befestigungspunkt für mindestens eine Spiegelanordnung, eine Einlegeplatte, eine Einfassung, eine Kamera, eine Spiegelabdeckung, eine Multifunktionslampe, ein Blinksignal, ein Lichtmodul und/oder eine Antenne bereitzustellen.

10. Rückblickvorrichtung nach einem der vorangehenden Ansprüche, wobei
sich der Kopf (206, 2406) um eine Neigungsachse (302) drehen kann und
sich der Kopf (206, 2406) um eine Klappachse (202) drehen kann,
wobei beide Drehungen von dem Aktuator (402, 1602, 2408) angetrieben werden.

11. Rückblickvorrichtung nach Anspruch 10, wobei
der Anschlagstift (510, 3510, 4510) und das Befestigungsmittel (702) axial auf die Neigungsachse (302) ausgerichtet sind und eine Welle (2410) des Aktuators (2408) axial auf die Klappachse (202) ausgerichtet ist.

12. Rückblickvorrichtung nach einem der vorangehenden Ansprüche, wobei
• das Scharnier (506, 3506, 4506) des Aktuators (402, 1602, 2408, 3408) mindestens eine Aussparung (3503, 3504, 4503) bereitstellt, die dazu ausgelegt ist, mindestens eine Erweiterung des Scharniers (806, 1106, 1306) des Gehäuserahmens (802, 1102, 1302) aufzunehmen, und/oder
• das Scharnier (506, 3506, 4506) des Aktuators (402, 1602, 2408, 3408) mindestens einen Vorsprung (3505) bereitstellt, der dazu ausgelegt ist, in mindestens eine Aussparung des Scharniers (806, 1106, 1306) des Gehäuserahmens (802, 1102, 1302) eingesetzt zu sein, und/oder
• das Scharnier (506, 3506, 4506) des Aktuators (402, 3408) ein ineinandergreifendes Scharnier ist, das insbesondere Stege bereitstellt, und das Scharnier (806, 1106, 1306) des Gehäuserahmens (802, 1102, 1302) ein ineinandergreifendes Scharnier ist, das insbesondere Stege (810, 1110, 1310) bereitstellt.

13. Rückblickvorrichtung nach Anspruch 12, wobei
• das Scharnier (506, 3506, 4506) des Aktuators (402, 1602, 2408, 3408) und/oder das Scharnier (806, 1106, 1306) des Gehäuserahmens (802, 1102, 1302) mindestens einen Vorsprung (3503) oder Stege (810, 1110, 1310) umfasst/umfassen, die einen Anschlagpunkt (1004, 1006) für den Aktuator (402, 1602, 2408, 3408) bereitstellen, um zu verhindern, dass sich der Spiegelkopf (206, 2406) weiter, aufwärts und/oder abwärts, neigt, und/oder
• die mindestens eine Aussparung (3503, 3504, 4503) und/oder der mindestens eine Vorsprung (3503) oder die Stege (810, 1110, 1310) dazu ausgelegt sind, während des Betriebs des Aktuators (402, 1602, 2408, 3408) Spiel zwischen dem Gehäuserahmen (802, 1102, 1302) und dem Aktuator (402, 1602, 2408, 3408) bereitzustellen.

14. Rückblickvorrichtung nach Anspruch 12 oder 13, wobei
die ineinandergreifenden Scharniere (506, 3506, 4506, 806, 1106, 1306) über die Anzahl vorstehender Blätter, die Abstände zwischen benachbarten Blättern, die die Aussparungen (3503, 3504, 4503) bestimmen, und/oder die Höhe der Blätter den Neigungsbereich bestimmen.

15. Rückblickvorrichtung nach einem der vorangehenden Ansprüche, wobei
der Anschlagstift (3510, 4510) eine Kipplagerfläche (3511, 4511) und einen Schraubenbereich (3512, 4512), der dazu ausgelegt ist, in eine Öffnung (3509, 4509) des Aktuators (3408), insbesondere ein Gehäuse oder Gehäuseteil des Aktuators (3408), geschraubt zu sein, umfasst.

16. Rückblickvorrichtung nach einem der vorangehenden Ansprüche, wobei
die Verkleidung (1604) mindestens einen Vorsprung (1610A, 1610B) aufweist, der dazu ausgelegt ist, sich durch den Gehäuseunterteil (1502) in Richtung eines Basisrahmens (1802) der Basis zu erstrecken, und
der Basisrahmen (1802) mindestens einen Vorsprung (1808) aufweist,
wobei die Vorsprünge (1610A, 1610B, 1808) der Verkleidung (1604) und des Basisrahmens (1802) in der gleichen Ebene angeordnet sind, sodass sie wechselwirken können, um für den Kopf (206, 2406) einen Anschlagpunkt gegen Drehung während eines Aufpralls auf ein Hindernis bereitzustellen.

17. Rückblickvorrichtung nach einem der vorangehenden Ansprüche, wobei
• der Basisrahmen (1802) der Basis mit mindestens einer Öffnung (1806) versehen ist, die dazu betreibbar ist, ein Befestigungsmittel (2412) aufzunehmen, um den Aktuator (1602, 2408) an dem Basisrahmen (1802) zu befestigen, und/oder
• der Basisrahmen (1802) der Basis mit mindestens einer Aussparung (1804) versehen ist, die dazu betreibbar ist, mindestens eine Erweiterung (1606) des Aktuators (1602) aufzunehmen.

18. Rückblickvorrichtung nach einem der vorangehenden Ansprüche, ferner umfassend:
• eine erste Dichtung (1504) zum Abdichten eines Spalts zwischen der Verkleidung (518) und dem Gehäuseunterteil (602) und/oder
• eine zweite Dichtung (1902), insbesondere in Form einer Bruchflächendichtung, zum Abdichten eines Spalts zwischen dem Basisrahmen (1802) der Basis und dem Aktuator (1602).

19. Rückblickvorrichtung nach Anspruch 18, wobei
• die erste Dichtung (1504) mindestens einen Vorsprung (1514) und ein erstes Dichtmittel (1516) umfasst und/oder
• die erste Dichtung (1504) durch ein 2K-Gießverfahren als ein einziges Element mit einem ersten Dichtmittel (1516) ausgebildet ist.

20. Rückblickvorrichtung nach Anspruch 19, wobei
der Gehäuseunterteil (1502) eine Öffnung (1506), die dazu betreibbar ist, eine Öffnung, durch welche die Spiegelbasis (1802) mit dem Aktuator (1602) verbunden sein kann, bereitzustellen, und eine Führung (1508) mit einer Wölbung, die zu der Wölbung der Dichtung (1504) passt und mindestens eine Aussparung (1510) aufweist, umfasst,
sodass, wenn der mindestens eine Vorsprung (1514) der Dichtung (1504) mit der mindestens einen Aussparung (1510) der Führung (1508) ausgerichtet ist, die Dichtung (1504) durch Einsetzen des mindestens einen Vorsprungs (1514) in die mindestens eine Aussparung (1510) an dem Gehäuseunterteil (1502) befestigt werden kann.

21. Rückblickvorrichtung nach Anspruch 19 oder 20, wobei
• der Aktuator (1602) so an dem Gehäuseunterteil (1502) angeordnet ist, dass die Verkleidung (1604) an dem ersten Dichtmittel (1516) anliegt, und/oder
• der Gehäuserahmen (1702) so an dem Gehäuseunterteil (1502) und an dem Aktuator (1602) angebracht ist, dass der Aktuator (1602) mit dem Gehäuseunterteil (1502) gekoppelt ist, wodurch die Verkleidung (1604) an dem ersten Dichtmittel (1516) anliegend gehalten wird.

22. Rückblickvorrichtung nach einem der Ansprüche 18 bis 21, wobei die zweite Dichtung (1902) ein Befestigungsmittel (1904) zum festen Sichern der zweiten Dichtung (1902) an dem Basisrahmen (1802) umfasst, wobei das Befestigungsmittel (1904) vorzugsweise dazu ausgelegt ist, in eine Öffnung (1810) des Basisrahmens (1802) eingesetzt zu sein.

23. Rückblickvorrichtung nach Anspruch 22, wobei,
wenn der Aktuator (1602) an dem Basisrahmen (1802) angebracht ist, die zweite Dichtung (1902) an der Verkleidung (1604) anliegt.

24. Rückblickvorrichtung nach einem der Ansprüche 19 bis 23, wobei
die Basis eine obere Basisabdeckung (2302) und eine untere Basisabdeckung (2304) umfasst und,
wenn die obere Basisabdeckung (2302) und die untere Basisabdeckung (2304) an dem Basisrahmen (1802) angebracht sind, die obere Basisabdeckung (2302) und die untere Basisabdeckung (2304) an der zweiten Dichtung (1902) anliegen und ein zweites Dichtmittel erzeugen.

25. Rückblickvorrichtung nach einem der vorangehenden Ansprüche, wobei
der Aktuator (402) ein oberes Gehäuse (502, 3502, 4502) und ein unteres Gehäuse (504) umfasst, die miteinander verbunden oder aneinander befestigt sind, und
• die Verkleidung (518) auf dem unteren Gehäuse (504) angeordnet ist, wobei vorzugsweise Clips (524) der Verkleidung (518) mit Vorsprüngen (520) des unteren Gehäuses (504) verriegelt sind, um die Verkleidung (518) an dem Aktuator (402) zu sichern, und/oder
• die Neigungsachse (532, 5320) dazu ausgelegt ist, mit dem oberen Gehäuse (502, 3502, 4502) verbunden zu sein.

26. Rückblickvorrichtung nach einem der vorangehenden Ansprüche, ferner umfassend:
• einen Verbinder (512), der dazu ausgelegt ist, in den Aktuator (402) eingesetzt zu sein, um Energie, insbesondere von dem Fahrzeug (100), zu liefern, und/oder
• eine Kamerabefestigung (514), die dazu ausgelegt ist, mit dem Aktuator (402), insbesondere mit dem unteren Gehäuse (504) des Aktuators (402), verbunden zu sein.

27. Fahrzeug (100) mit mindestens einer Rückblickvorrichtung nach einem der vorangehenden Ansprüche.

## Revendications

1. Dispositif de vision arrière (102, 104) pour un véhicule (100), ledit dispositif de vision arrière (102, 104) comprenant :
• une base (204, 1802, 2302, 2304) adaptée pour être montée sur un côté du véhicule (100), ladite base (204, 1802, 2302, 2304) ayant une première extrémité d'attache disposée sur le côté du véhicule (100) et une deuxième extrémité d'attache disposée à l'opposé de la première extrémité d'attache ;
• une tête (206, 2406) destinée à supporter au moins un moyen pour fournir un champ de vision vers l'arrière à un conducteur du véhicule (100) et disposée à ladite deuxième extrémité d'attache de ladite base (204, 1802, 2302, 2304), ladite tête (206, 2406) comprenant un orifice (536) permettant d'accéder à ladite base (204, 1802, 2302, 2304) ;
• un actionneur (402, 1602, 2408, 3408) comprenant un pied (534) et/ou au moins une extension (1606) à relier à la base (204, 1802, 2302, 2304), un premier moyen d'attache, tel que des protubérances (520), et un axe d'inclinaison (532, 5320) ;
• une enveloppe (518, 1604, 2402) comprenant des deuxièmes moyens d'attache, tels que des clips (524) ou des protubérances (1610A, 1610B), adaptés pour s'attacher audits premiers moyens d'attache de l'actionneur (402, 1602, 2408, 3408) afin d'attacher de manière fixe ladite enveloppe (518, 1604, 2402) audit actionneur (402, 1602, 2408) ;
• un bas de boîtier (602, 1502), l'actionneur (402, 1602, 2408, 3408) reposant sur le bas de boîtier (602, 1502), par l'intermédiaire de l'enveloppe (518, 1604, 2402) ; et
• un cadre de boîtier (802, 1102, 1302, 1702) monté sur le bas de boîtier (602, 1502) ;
**caractérisé en ce que**
l'actionneur (402, 1602, 2408, 3408) comprend une charnière (506, 3506, 4506) ; et
le cadre de boîtier (802, 1102, 1302) comprend une charnière complémentaire (806, 1106, 1306),
la charnière (506, 3506, 4506) de l'actionneur (402, 3408) étant adaptée pour être engagée par la charnière complémentaire (806, 1106, 1306) fournie par le cadre de boîtier (802, 1102, 1302).

2. Dispositif de vision arrière selon la revendication 1, dans lequel
• l'axe d'inclinaison (532, 5320) de l'actionneur (402, 1602, 2408, 3408) est adapté pour être attaché de manière fixe au bas de boîtier (602) et/ou au cadre de boîtier (802, 1102, 1302, 1702) de telle sorte que, lorsque l'axe d'inclinaison (532, 5320) est tourné, le bas de boîtier (602, 1502) et le cadre de boîtier (802, 1102, 1302, 1702) tournent également, résultant en une rotation de la tête (206, 2406), et/ou
• le bas de boîtier (602, 1502) présente un orifice (604, 1506) adaptée pour fournir un espace pour le pied (534) ou l'au moins une extension (1606) de l'actionneur (402, 1602, 2408, 3408) qui est adapté pour avoir une géométrie complémentaire à celle de l'enveloppe (518, 1604) de telle sorte que le bord de l'orifice (604, 1506) puisse tourner autour de l'enveloppe (518, 1604) lorsque le bas de boîtier (602, 1502) est déplacé tout en maintenant le contact entre l'orifice (604, 1506) et l'enveloppe (518, 1604) en scellant l'interstice entre l'actionneur (402, 1602) et le bas de boîtier (602, 1502).

3. Dispositif de vision arrière selon la revendication 1 ou 2, dans lequel
• le bas de boîtier (602, 1502) comprend au moins une première monture (606) adaptée pour fournir un point de montage ou d'attache (1512) afin de monter le cadre de boîtier (802, 1702) sur le bas de boîtier (602, 1502) via une ou plusieurs premières montures (804) du cadre de boîtier (802, 1702), et/ou
• le bas de boîtier (602) comprend au moins une deuxième monture (608) adaptée pour fournir un point de montage afin de monter l'axe d'inclinaison (532, 5320) de l'actionneur (402, 1602, 2408, 3408) sur le bas de boîtier (602), de préférence via au moins une fixation (702) traversant un orifice (538, 5380) de l'axe d'inclinaison (532, 5320).

4. Dispositif de vision arrière selon la revendication 3, dans lequel
• la géométrie de l'axe d'inclinaison (532, 5320) correspond à celle de la deuxième monture (608) du bas de boîtier (602), de telle sorte que l'axe d'inclinaison (532, 5320) peut être inséré dans ladite deuxième monture (608), et/ou
• la fixation (702) est adaptée pour être insérée dans l'axe d'inclinaison (532) à travers un orifice (610) de la deuxième monture (608) afin de fixer l'attache de l'axe d'inclinaison (532) au bas de boîtier (602), et/ou
• un premier point d'attache est prévu entre l'axe d'inclinaison (532) et la deuxième monture (608) du bas de boîtier (602), ce qui permet la rotation du bas de boîtier (602) autour de la fixation (702).

5. Dispositif de vision arrière selon la revendication 1 ou 2, dans lequel
• le bas de boîtier (602) comprend au moins une première monture (1202, 1402) adaptée pour fournir un point de montage afin de monter le cadre de boîtier (1102, 1302) sur le bas de boîtier (602) via une ou plusieurs premières monture (1104, 1304) du cadre de boîtier (1102, 1302), et/ou
• le cadre de boîtier (1102, 1302, 1702) comprend au moins une deuxième monture (1114, 1314) adaptée pour fournir un point de montage ou d'attache (1704) afin de monter l'axe d'inclinaison (532, 5320) de l'actionneur (402) sur le cadre de boîtier (1102, 1302, 1702), de préférence via au moins une fixation (702) traversant un orifice (538, 5380) de l'axe d'inclinaison (532, 5320).

6. Dispositif de vision arrière selon la revendication 5, dans lequel
• la géométrie de l'axe d'inclinaison (532, 5320) correspond à celle de la deuxième monture (1114, 1314) du cadre de boîtier (1102, 1302, 1702) de telle sorte que l'axe d'inclinaison (532, 5320) peut loger dans ladite deuxième monture (1114, 1314), et/ou
• la fixation (702) est adaptée pour être insérée à travers un orifice (1116, 1316) dans ladite deuxième monture (1114, 1314) dans l'axe d'inclinaison (532, 5320) pour fixer l'attache de l'axe d'inclinaison (532, 5320) au cadre de boîtier (1102, 1302, 1702), et/ou
• un premier point d'attache est prévu entre l'axe d'inclinaison (532, 5320) et ladite deuxième monture (1114, 1314) du cadre de boîtier (1102, 1302, 1702) qui permet la rotation du cadre de boîtier (1102, 1302, 1702) autour de la fixation (702).

7. Dispositif de vision arrière selon l'une quelconque des revendications 4 à 6, dans lequel la géométrie de l'axe d'inclinaison (532, 5320) est rectangulaire, trapézoïdale, effilée et/ou en forme de T, l'axe d'inclinaison en forme de T (5320) ayant de préférence une partie effilée (5321) et une partie arrondie (5322).

8. Dispositif de vision arrière selon l'une quelconque des revendications précédentes, dans lequel le cadre de boîtier (802, 1102) est adapté pour être abaissé sur le bas de boîtier (602) de telle sorte que
• chaque première monture (606, 1402 ) du bas de boîtier (602) et une première monture (804, 1114, 1304) du cadre de boîtier (802, 1102, 1302) sont alignées pour l'attache, et/ou
• la charnière (806, 1106, 1306) du cadre de boîtier (802, 1102, 1302) s'engage dans la charnière (506, 3506, 4506) de l'actionneur (402), et/ou
• au moins un orifice (808, 1108, 1308) de la charnière (806, 1106, 1306) du cadre de boîtier (802, 1102, 1302) est alignée axialement avec au moins un orifice (508, 3508, 4508) de la charnière (506, 3506, 4506) de l'actionneur (402, 1602, 2408, 3408) qui permet l'insertion d'une goupille de queue (510, 3510, 4510), et/ou
• un deuxième point d'attache est prévu entre le cadre de boîtier (802, 1102, 1302) et la charnière (506, 3506, 4506) de l'actionneur (402), via la connexion intermédiaire réalisée en fixant le bas de boîtier (602) au cadre de boîtier (802, 1102, 1302).

9. Dispositif de vision arrière selon l'une quelconque des revendications précédentes, dans lequel
le bas de boîtier (602) et/ou le cadre de boîtier (802, 1102, 1302) est adapté pour fournir, au moins partiellement, un point de montage pour au moins un parmi un rétroviseur, une plaque d'appui, une lunette, une caméra, un couvercle de rétroviseur, une lampe multifonctionnelle, un clignotant, un module d'éclairage et/ou une antenne.

10. Dispositif de vision arrière selon l'une quelconque des revendications précédentes, dans lequel
la tête (206, 2406) peut tourner autour d'un axe d'inclinaison (302), et
la tête (206, 2406) peut tourner autour d'un axe de pliage (202),
les deux rotations étant entraînées par l'actionneur (402, 1602, 2408).

11. Dispositif de vision arrière selon la revendication 10, dans lequel
la goupille de queue (510, 3510, 4510) et la fixation (702) sont alignées axialement sur l'axe d'inclinaison (302), et
un arbre (2410) de l'actionneur (2408) est aligné axialement sur l'axe de pliage (202).

12. Dispositif de vision arrière selon l'une quelconque des revendications précédentes, dans lequel
• la charnière (506, 3506, 4506) de l'actionneur (402, 1602, 2408, 3408) présente au moins un retrait (3503, 3504, 4503) adapté pour recevoir au moins une extension de la charnière (806, 1106, 1306) du cadre de boîtier (802, 1102, 1302), et/ou
• la charnière (506, 3506, 4506) de l'actionneur (402, 1602, 2408, 3408) présente au moins une saillie (3505) adaptée à être insérée dans au moins un retrait de la charnière (806, 1106, 1306) du cadre de boîtier (802, 1102, 1302), et/ou
• la charnière (506, 3506, 4506) de l'actionneur (402, 3408) est une charnière imbriquée, notamment fournissant des bandes, et la charnière (806, 1106, 1306) du cadre de boîtier (802, 1102, 1302) est une charnière imbriquée, notamment fournissant des bandes (810, 1110, 1310).

13. Dispositif de vision arrière selon la revendication 12, dans lequel
• la charnière (506, 3506, 4506) de l'actionneur (402, 1602, 2408, 3408) et/ou la charnière (806, 1106, 1306) du cadre de boîtier (802, 1102, 1302) comprend au moins une saillie (3503) ou des bandes (810, 1110, 1310) fournissant un point d'arrêt (1004, 1006) pour l'actionneur (402, 1602, 2408, 3408) afin d'empêcher la tête de miroir (206, 2406) de continuer à s'incliner, vers le haut et/ou vers le bas, et/ou
• l'au moins un retrait (3503, 3504, 4503) et/ou l'au moins une saillie (3503) ou les bandes (810, 1110, 1310) sont adaptés pour fournir un espace libre entre le cadre de boîtier (802, 1102, 1302) et l'actionneur (402, 1602, 2408, 3408) pendant le fonctionnement de l'actionneur (402, 1602, 2408, 3408).

14. Dispositif de vision arrière selon la revendication 12 ou 13, dans lequel
les charnières imbriquées (506, 3506, 4506, 806, 1106, 1306) déterminent l'amplitude d'inclinaison, via le nombre de vantaux en saillie, les distances entre les vantaux voisins, qui déterminent les retraits (3503, 3504, 4503), et/ou les hauteurs des vantaux.

15. Dispositif de vision arrière de l'une quelconque des revendications précédentes, dans lequel
la goupille de queue (3510, 4510) comprend une surface d'appui d'inclinaison (3511, 4511) et une zone de vissage (3512, 4512) adaptée pour être vissée dans une ouverture (3509, 4509) de l'actionneur (3408), notamment un boîtier ou une partie de boîtier de l'actionneur (3408).

16. Dispositif de vision arrière selon l'une quelconque des revendications précédentes, dans lequel
l'enveloppe (1604) comporte au moins une protubérance (1610A, 1610B) adaptée pour s'étendre à travers le bas de boîtier (1502) vers un cadre de base (1802) de la base, et
le cadre de base (1802) comporte au moins une protubérance (1808),
les protubérances (1610A, 1610B, 1808) de l'enveloppe (1604) et du cadre de base (1802) étant agencées dans le même plan de telle sorte qu'elles peuvent interagir pour fournir un point d'arrêt à la rotation de la tête (206, 2406) lors d'un impact avec un obstacle.

17. Dispositif de vision arrière selon l'une quelconque des revendications précédentes, dans lequel
• le cadre de base (1802) de la base est pourvu d'au moins un orifice (1806) pouvant être utilisée pour recevoir une fixation (2412) afin de fixer l'actionneur (1602, 2408) au cadre de base (1802), et/ou
• le cadre de base (1802) de la base est pourvu d'au moins un retrait (1804) pouvant être utilisé pour recevoir au moins une extension (1606) de l'actionneur (1602).

18. Dispositif de vision arrière selon l'une quelconque des revendications précédentes, comprenant en outre
• une première garniture (1504) pour sceller un interstice entre l'enveloppe (518) et le bas de boîtier (602), et/ou
• une deuxième garniture (1902), notamment sous la forme d'une garniture à surface de rupture, pour sceller un interstice entre le cadre de base (1802) de la base et l'actionneur (1602).

19. Dispositif de vision arrière selon la revendication 18, dans lequel
• la première garniture (1504) comprend au moins une protubérance (1514) et un premier joint (1516), et/ou
• la première garniture (1504) est formée comme un élément unique par un processus de moulage bicomposant avec un premier joint (1516).

20. Dispositif de vision arrière selon la revendication 19, dans lequel
le bas de boîtier (1502) inclut un orifice (1506), qui peut être utilisée pour fournir une ouverture à travers laquelle la base du miroir (1802) peut être reliée à l'actionneur (1602), et un guide (1508) dont la courbure correspond à la courbure de la garniture (1504) et qui comporte au moins un retrait (1510),
de telle sorte que, lorsque l'au moins une protubérance (1514) de la garniture (1504) est alignée avec l'au moins un retrait (1510) du guide (1508), la garniture (1504) peut être fixée sur le bas de boîtier (1502) en insérant l'au moins une protubérance (1514) dans l'au moins un retrait (1510).

21. Dispositif de vision arrière selon la revendication 19 ou 20, dans lequel
• l'actionneur (1602) est agencé sur le bas de boîtier (1502) de telle sorte que l'enveloppe (1604) vienne en butée contre le premier joint (1516), et/ou
• le cadre de boîtier (1702) est attaché au bas de boîtier (1502) et à l'actionneur (1602) de telle sorte que l'actionneur (1602) est couplé au bas de boîtier (1502), ce qui maintient l'enveloppe (1604) en butée avec le premier joint (1516).

22. Dispositif de vision arrière selon l'une quelconque des revendications 18 à 21, dans lequel la deuxième garniture (1902) inclut une fixation (1904) pour sécuriser de manière fixe la deuxième garniture (1902) au cadre de base (1802), la fixation (1904) étant de préférence adaptée pour être insérée dans un orifice (1810) du cadre de base (1802).

23. Dispositif de vision arrière selon la revendication 22, dans lequel
lorsque l'actionneur (1602) est attaché au cadre de base (1802), la deuxième garniture (1902) vient en butée contre l'enveloppe (1604).

24. Dispositif de vision arrière selon l'une quelconque des revendications 19 à 23, dans lequel
la base inclut un couvercle de base supérieur (2302) et un couvercle de base inférieur (2304), et,
lorsque le couvercle de base supérieur (2302) et le couvercle de base inférieur (2304) sont attachés au cadre de base (1802), le couvercle de base supérieur (2302) et le couvercle de base inférieur (2304) viennent en butée contre la deuxième garniture (1902), créant un deuxième joint.

25. Dispositif de vision arrière selon l'une quelconque des revendications précédentes, dans lequel
l'actionneur (402) comprend un boîtier supérieur (502, 3502, 4502) et un boîtier inférieur (504), qui sont joints ou fixés l'un à l'autre, et
• l'enveloppe (518) est placée sur le boîtier inférieur (504), les clips (524) de l'enveloppe (518) s'emboîtant de préférence avec les protubérances (520) du boîtier inférieur (504), afin de sécuriser l'enveloppe (518) à l'actionneur (402), et/ou
• l'axe d'inclinaison (532, 5320) est adapté pour être relié au boîtier supérieur (502, 3502, 4502).

26. Dispositif de vision arrière selon l'une quelconque des revendications précédentes, comprenant en outre
• un connecteur (512) destiné à être inséré dans l'actionneur (402) pour fournir de l'énergie, notamment à partir du véhicule (100), et/ou
• une monture de caméra (514) adaptée pour se connecter à l'actionneur (402), notamment au boîtier inférieur (504) de l'actionneur (402).

27. Véhicule (100) avec au moins un dispositif de vision arrière selon l'une quelconque des revendications précédentes.
